(19) Europäisches Patentamt / European Patent Office / Office européen des brevets

(11) **EP 2 676 339 B1**

(12) **EUROPÄISCHE PATENTSCHRIFT**

(45) Veröffentlichungstag und Bekanntmachung des Hinweises auf die Patenterteilung:
**08.04.2015 Patentblatt 2015/15**

(21) Anmeldenummer: **12704043.4**

(22) Anmeldetag: **09.02.2012**

(51) Int Cl.:
*H01S 3/094* *(2006.01)*     *H01S 3/00* *(2006.01)*
*H01S 3/06* *(2006.01)*

(86) Internationale Anmeldenummer:
**PCT/EP2012/052172**

(87) Internationale Veröffentlichungsnummer:
**WO 2012/110389 (23.08.2012 Gazette 2012/34)**

(54) **PUMPLICHTANORDNUNG FÜR EINEN SCHEIBENLASER**

PUMP LIGHT ARRANGEMENT FOR A DISC LASER

ENSEMBLE LUMIÈRE DE POMPAGE POUR LASER À DISQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.02.2011 DE 102011004204**

(43) Veröffentlichungstag der Anmeldung:
**25.12.2013 Patentblatt 2013/52**

(73) Patentinhaber: **TRUMPF Laser GmbH**
**78713 Schramberg (DE)**

(72) Erfinder:
• **SCHAD, Sven**
  **78628 Rottweil (DE)**
• **KILLI, Alexander**
  **78647 Trossingen (DE)**

(74) Vertreter: **Kohler Schmid Möbus**
**Patentanwälte**
**Ruppmannstraße 27**
**70565 Stuttgart (DE)**

(56) Entgegenhaltungen:
**EP-A1- 1 252 687     WO-A1-2011/163140**
**US-A- 4 247 772**

• **YANG S ET AL: "Multipass Ti:sapphire amplifier based on a parabolic mirror", OPTICS COMMUNICATIONS, NORTH-HOLLAND PUBLISHING CO. AMSTERDAM, NL, Bd. 234, Nr. 1-6, 15. April 2004 (2004-04-15), Seiten 385-390, XP004499705, ISSN: 0030-4018, DOI: 10.1016/J.OPTCOM.2004.02.034**
• **NAJAFI M ET AL: "Simulation of thin disk laser pumping process for temperature dependent Yb: YAG property", OPTICS COMMUNICATIONS, NORTH-HOLLAND PUBLISHING CO. AMSTERDAM, NL, Bd. 282, Nr. 20, 15. Oktober 2009 (2009-10-15), Seiten 4103-4108, XP026525402, ISSN: 0030-4018, DOI: 10.1016/J.OPTCOM.2009.06.068 [gefunden am 2009-07-16]**

**Beschreibung**

Die vorliegende Erfindung betrifft eine Pumplichtanordnung für einen Scheibenlaser, umfassend: eine Fokussiereinrichtung, insbesondere einen Hohlspiegel, mit einer Reflexionsfläche zur Fokussierung eines beim Eintritt in die Pumplichtanordnung kollimierten Pumplichtstrahls auf ein laseraktives Medium in Form einer Laserscheibe, die in einem Brennpunkt der Fokussiereinrichtung angeordnet ist, sowie eine Umlenkanordnung zur Umlenkung des Pumplichtstrahls zwischen mehreren an der Reflexionsfläche gebildeten Reflexionsbereichen, die in unterschiedlichen Winkelbereichen um eine Mittelachse der Reflexionsfläche herum angeordnet sind, wobei die Umlenkeinrichtung ausgebildet ist, eine Umlenkung des Pumplichtstrahls zwischen jeweils zwei der Reflexionsbereiche mit einer optischen Weglänge zu erzeugen, die größer als die der doppelten Brennweite der Fokussiereinrichtung entsprechende optische Weglänge bei einer telezentrischen Abbildung ist. Die Erfindung betrifft auch einen Scheibenlaser mit einer solchen Pumplichtanordnung, sowie ein Verfahren zum Pumpen eines laseraktiven Mediums, umfassend: Mehrmaliges Fokussieren eines beim ersten Fokussieren kollimierten Pumplichtstrahls auf das laseraktive Medium mittels einer Fokussiereinrichtung, insbesondere eines Hohlspiegels, wobei das laseraktive Medium in Form einer Laserscheibe im Brennpunkt der Fokussiereinrichtung angeordnet ist, wobei zwischen aufeinander folgenden Fokussierungsschritten eine Umlenkung des Pumplichtstrahls zwischen unterschiedlichen Reflexionsbereichen einer Reflexionsfläche der Fokussiereinrichtung erfolgt, die in unterschiedlichen Winkeln um eine Mittelachse der Reflexionsfläche herum angeordnet sind, und wobei die Umlenkung des Pumplichtstrahls zwischen jeweils zwei der Reflexionsbereiche mit einer optischen Weglänge erfolgt, die größer als die der doppelten Brennweite der Fokussiereinrichtung entsprechende optische Weglänge bei einer telezentrischen Abbildung ist.

Scheibenlaser besitzen ein laseraktives Medium (Verstärkermedium) mit geringer Dicke (Laserscheibe), welches gut gekühlt werden kann. Dadurch eignet sich das Konzept des Scheibenlasers für hohe Laserleistungen im Multi-Kilowatt-Bereich. Wegen der geringen Dicke des Verstärkermediums wird allerdings bei einem Durchgang durch das laseraktive Medium wenig Pumpstrahlung absorbiert, was ohne das Vorsehen geeigneter Maßnahmen beim Pumpen des laseraktiven Mediums eine geringe Effizienz des Lasersystems zur Folge hat. Um eine für die Erfüllung der Laserbedingung in dem laseraktiven Medium benötigte Mindestenergie bzw. Mindest-Laserleistung zu erhalten, wird in der Regel ein Mehrfachdurchgang der Pumpstrahlung benötigt.

Dieser Mehrfachdurchgang kann z.B. auf die in der EP 0 632 551 B1 beschriebene Weise realisiert werden. Dort wird ein Pumplichtstrahl unter einem Winkel zur Oberseite des scheibenförmigen laseraktiven Mediums eingestrahlt und an einer rückseitig an dem laseraktiven Medium angebrachten Reflexionsfläche reflektiert. Der reflektierte Pumplichtstrahl wird nachfolgend über mehrere Pumplichtspiegel und Hilfsspiegel mehrmals auf das laseraktive Medium zurückreflektiert. Für die Umlenkung werden sphärische Spiegel benutzt und es wird eine direkte 1:1 Abbildung des Pumpflecks bei zwei aufeinander folgenden Fokussierungsschritten erzeugt. Allerdings divergiert der Pumpstrahl bei jeder Abbildung, so dass die Pumpfleckgröße zunimmt und damit die in das laseraktive Medium eingekoppelte Leistung abnimmt, was die Zahl der Mehrfachdurchgänge limitiert.

Dieses Problem soll die Pumpanordnung lösen, welche in der EP 1 252 687 B1 dargestellt ist, vgl. auch "Pumpoptiken und Resonatoren für Scheibenlaser", S. Erhard, Dissertation, Universität Stuttgart, 2002, ISBN 3-8316-0173-9. Dort wird der Pumplichtstrahl mit Hilfe eines Parabolspiegels auf das laseraktive Medium fokussiert, wobei der Mehrfachdurchgang dadurch erreicht wird, dass der Pumplichtstrahl mehrmals mit Hilfe von Umlenkeinrichtungen, z.B. Prismen, zwischen unterschiedlichen Reflexionsbereichen umgelenkt wird, die in unterschiedlichen Kreissektoren in ein- und demselben Ringbereich des Parabolspiegels liegen. Da der Parabolspiegel den divergenten Pumplichtstrahl kollimiert, der vom laseraktiven Medium ausgeht, welches in der Brennebene des Parabolspiegels angeordnet ist, wird die Divergenz des zu fokussierenden Pumpstrahlungsfeldes beim Mehrfachdurchgang teilweise kompensiert, so dass eine höhere Pumpleistungsdichte im laseraktiven Medium erzeugt werden kann.

Allerdings führt die Umlenkung der Pumpstrahlung zwischen unterschiedlichen Kreissektoren des Parabolspiegels dazu, dass mit zunehmender Anzahl an Durchgängen die Ausnutzung der an dem Parabolspiegel gebildeten Reflexionsfläche abnimmt, d.h. es werden immer kleinere Winkelbereiche (Kreissektoren) mit immer kleineren Reflexionsbereichen zur Reflexion der Pumpstrahlung benötigt. Die Folge davon ist, dass eine Erhöhung der Effizienz der Pumplichtanordnung, die bei hohen Laserleistungen erforderlich wird, nur durch eine höhere Strahlqualität bzw. ein kleineres Strahlparameterprodukt des Pumplichts erreicht werden kann.

In "Scheibenlaser mit Kilowatt-Dauerstrichleistung", C. Stewen, Dissertation, Universität Stuttgart, 2002, ISBN 3-89675-763, wird vorgeschlagen, unter Verwendung mehrerer Umlenkeinheiten auch mehrere Ringbereiche mit Reflexionsbereichen auf dem Parabolspiegel zur Abbildung zu nutzen, wobei die einzelnen Ringe radial in einem Segment des Parabolspiegels angeordnet sind. Die Abbildung des Pumplichtflecks erfolgt hierbei typischer Weise mit einer telezentrischen Abbildung.

Je größer die Anzahl der Umlenkungen des Pumplichtstrahls ist, desto größer wird der Effekt der Divergenz, der durch die Verwendung des Parabolspiegels nicht kompensiert werden kann. Dies führt zu einer merklichen Verbreiterung des Pumpflecks bzw. des kollimierten Strahlenbündels zwischen dem Parabolspiegel und den Umlenkeinrichtungen, so dass auch bei einer solchen Pumplichtanordnung die Zahl der Mehrfachdurchgänge und damit die Höhe der Pumpleistungsdichte im laseraktiven Medium begrenzt ist.

In der Dissertation von S. Erhard wird auch vorgeschlagen, zur Erzeugung von Vielfachdurchgängen eine telezentrische Abbildung zu nutzen, bei welcher der Abstand zwischen den beiden für die Abbildung verwendeten Linsen der Summe ihrer Brennweiten entspricht. Bei realen Systemen tritt eine (ggf. ungewollte) Krümmung der Oberfläche der gepumpten Laserscheibe und/oder eine thermische Linse auf, welche zu einer resultierenden Gesamtbrennweite $f_{res}$ führen, die trotz der Anordnung der Linsen im Abstand der Summe der Brennweiten (2 f) zu einer Strahlaufweitung bei der Abbildung führt. In der Dissertation wird vorgeschlagen, diesen Effekt dadurch zu kompensieren, dass eine kleine Abweichung $\delta$ des Abstandes der Linsen von der doppelten Brennweite eingeführt wird, die so gewählt ist ($\delta = f^2/f_{ges}$), dass das Gesamtsystem eine telezentrische Abbildung ermöglicht.

Allerdings treten bei einem Lasersystem aufgrund der Fokussiereinrichtung Abbildungsfehler auf, die sich bei jedem Durchgang aufsummieren. Daher begrenzen diese Abbildungsfehler die Zahl der Mehrfachdurchgänge und damit die Höhe der Pumpleistungsdichte im aktiven Medium. Diese Fehler können nicht mit einer zusätzlichen Linse beschrieben werden und wurden in der Dissertation nicht berücksichtigt.

Aus dem Artikel "Multipass Ti:sapphire amplifier based on a parabolic mirror" von S. Yang et al., Optics Communications 234, Seiten 385-390 (2004), ist eine Pumplichtanordnung für einen Scheibenlaser bekannt geworden, bei welcher ein Strahlversatz eines Pumplichtstrahls auf einem Parabolspiegel in horizontaler Richtung durch Bewegen eines Dachspiegels in horizontaler Richtung und ein Strahlversatz des Pumplichtstrahls in vertikaler Richtung durch Verkippen des Ti:Saphir-Kristalls in vertikaler Richtung angepasst wird.

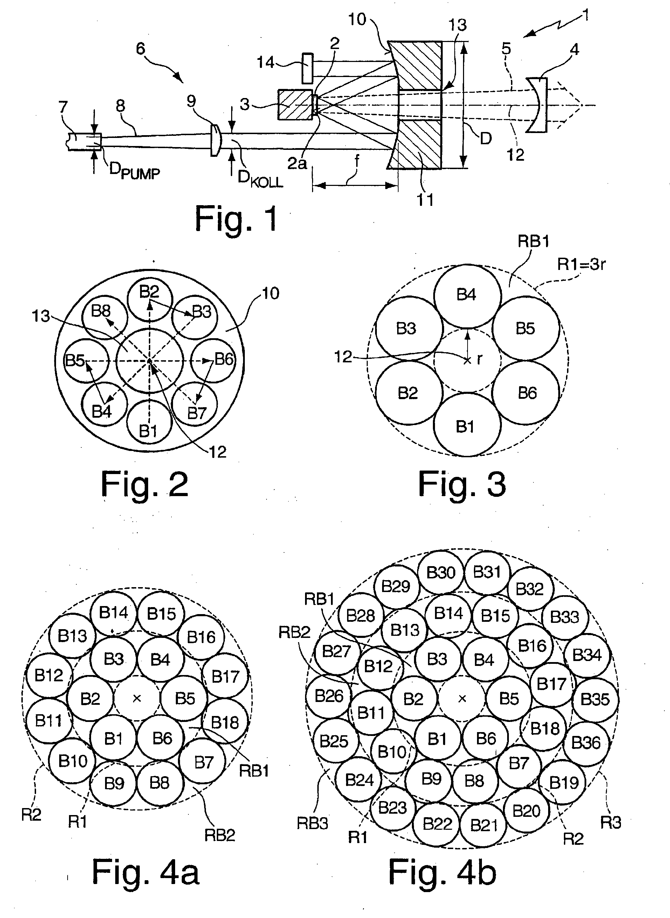

In dem Artikel "Simulation of thin disk laser pumping process for temperature dependent Yb:YAG property" von M. Najafi et al., Optics Communications 282, Seiten 4103-4108 (2009), ist ein Scheibenlaser beschrieben, bei dem eine Laserscheibe mit Hilfe eines Parabolspiegels in mehreren Durchgängen gepumpt wird. In Fig. 1 dieses Artikels sind Planspiegel gezeigt, die in einem Abstand vom Parabolspiegel angeordnet sind, der größer ist als der Abstand zwischen der Laserscheibe und dem Parabolspiegel.

## Aufgabe der Erfindung

Es ist die Aufgabe der vorliegenden Erfindung, eine Pumplichtanordnung, einen Scheibenlaser sowie ein zugehöriges Pumpverfahren bereitzustellen, welche eine erhöhte Anzahl an Pumplichtdurchgängen durch ein laseraktives Medium ermöglichen.

## Gegenstand der Erfindung

Diese Aufgabe wird erfindungsgemäß gelöst durch eine Pumplichtanordnung der eingangs genannten Art, bei der die zusätzliche optische Weglänge, welche über die optische Weglänge bei der telezentrischen Abbildung hinausgeht, mindestens ein Viertel der Brennweite der Fokussiereinrichtung beträgt, um eine durch Abbildungsfehler der Fokussiereinrichtung hervorgerufene Strahlaufweitung des Pumplichtstrahls bei aufeinanderfolgenden Fokussierungen auf das laseraktive Medium zu kompensieren bzw. zu verhindern.

Die Erfinder haben erkannt, dass auch bei einer telezentrischen Abbildung, bei welcher die optische Weglänge bei der Umlenkung zwischen zwei der Reflexionsbereiche (bei einem idealen Abbildungssystem) genau der doppelten Brennweite der Fokussiereinrichtung entspricht, der Pumplichtstrahl sich bei aufeinander folgenden Fokussierungsschritten aufweitet. Ein Wesentlicher Grund hierfür sind die (unvermeidlichen) Abbildungsfehler der Fokussiereinrichtung (des Hohl- bzw. Parabolspiegels), die dazu führen, dass auch bei (nominell) telezentrischer Abbildung sich das Fernfeld (d.h. der Pumplichtstrahl zwischen zwei Reflexionsbereichen) bei endlich ausgedehntem Durchmesser des aus der Pumplichtquelle austretenden Pumplichtstrahls von Durchgang zu Durchgang vergrößert.

Bei den üblicherweise verwendeten Abmessungen von Pumplichtanordnungen liegt die zusätzliche optische Weglänge, die benötigt wird, um die Vergrößerung der Divergenz wirksam kompensieren zu können, typischer Weise bei mehr als ca. ca. ein Viertel, besonders bevorzugt bei mehr als der Hälfte der Brennweite des Hohl- bzw. Parabolspiegels. Typischer Weise ist die benötigte zusätzliche optische Weglänge nicht größer als die Brennweite des Parabolspiegels. Die numerischen Werte für die zusätzliche optische Weglänge hängen neben der Brennweite f des Hohlspiegels typischer Weise auch vom Durchmesser D des Hohlspiegels bzw. der Reflexionsfläche ab. Für den genauen Betrag der zusätzlichen optischen Weglänge, der für die wirksame Kompensation der Strahlaufweitung benötigt wird, lässt sich keine analytische Formel angeben, der genaue Betrag lässt sich aber für eine Pumplichtanordnung mit vorgegebenen Parametern durch Simulationsrechnungen (z.B. Ray-Tracing) bestimmen.

Durch eine gezielte Abweichung von der optischen Weglänge bei der telezentrischen Abbildung kann die Aufweitung des Pumplichtstrahls weitestgehend verhindert werden. Durch diese Auslegung entsteht zudem im Nahfeld, also in der Abbildungsebene, eine gewünscht unscharfe Abbildung, die zu einer Reduktion der auftretenden Phasenstörungen am Rand des Pumpflecks führt, was sich ebenfalls positiv auf die Effizienz des Laserresonators bzw. der Pumplichtanordnung auswirkt. Bei realen Abbildungssystemen entspricht aufgrund einer ggf. auftretenden Krümmung bzw. thermischen Linse des laseraktiven Mediums die optische Weglänge, die für die telezentrische Abbildung benötigt wird, nicht exakt der doppelten Brennweite der Fokussiereinrichtung. Diese Effekte, die durch das laseraktive Medium hervorgerufen werden, können ggf. zusätzlich berücksichtigt bzw. kompensiert werden, indem die Abweichung ($\delta = f^2/f_{ges}$) von der doppelten Brennweite, die zur Erzeugung einer telezentrischen Abbildung erforderlich ist, bei der Bestimmung der optischen Weglänge der telezentrischen Abbildung mit berücksichtigt werden. Diese Abweichung $\delta = f^2/f_{ges}$ ist jedoch deutlich kleiner als die zusätzliche optische Weglänge, die benötigt wird, um die Abbildungsfehler der Fokussiereinrichtung zu kompensieren.

Da durch die oben beschriebenen Maßnahmen die Zahl der Mehrfachdurchgänge gesteigert werden kann, ist es, günstig, zusätzlich zur azimutalen Umlenkung des Pumplichtstrahls eine radiale Umlenkung des Pumplichtstrahls vorzunehmen, um zu einer möglichst hohen Pumpleistungsdichte im laseraktiven Medium zu kommen.

Zu diesem Zweck kann die Umlenkanordnung zur Umlenkung des Pumplichtstrahls zwischen unterschiedlich weit von der Mittelachse der Reflexionsfläche entfernten Reflexionsbereichen ausgebildet sein. Auf diese Weise kann die Reflexionsfläche der Fokussiereinrichtung auch bei einer Vielzahl von Mehrfachdurchgängen optimal ausgenutzt werden. Wie weiter oben dargestellt wurde, müsste im Gegensatz dazu für eine vorgegebene Oberfläche des Parabolspiegels bzw. einen vorgegebenen Durchmesser der Reflexionsfläche bei ausschließlich azimutaler Umlenkung und einer zunehmenden Anzahl an Durchgängen der Querschnitt des (kollimierten) Pumplichtstrahls verringert und somit die Strahlqualität des Pumplichts erhöht werden.

Zwar könnte auch bei ausschließlich azimutaler Umlenkung der Durchmesser der Reflexionsfläche vergrößert und somit ggf. auf die Verringerung des Querschnitts des Pumplichtstrahls verzichtet werden; allerdings hängt der maximale Durchmesser eines z.B. parabolischen Hohlspiegels von dessen Brennweite ab. Da allerdings bei gleichbleibendem Durchmesser des Parabolspiegels und abnehmender Brennweite der Koma-Fehler des Spiegels zunimmt, ist die Brennweite durch die Abbildungsfehler limitiert. Wünschenswert wäre aber die Nutzung des vollen Halbraums, also eines Raumwinkels von nahezu $2\pi$. Zusätzlich führt eine Abnahme der Brennweite z.B. dazu, dass sich der zwischen dem Parabolspiegel und dem laseraktiven Medium vorhandene Bauraum verringert und ggf. nicht zur Unterbringung der Umlenkanordnung bzw. einzelner Umlenkeinrichtungen ausreicht.

Die optische Weglänge des Pumplichtstrahls bei der Umlenkung zwischen jeweils zwei der Reflexionsbereiche kann derart gewählt werden, dass die in das laseraktive Medium eingekoppelte Leistung des Pumplichtstrahls maximiert ist. Die Erfinder haben herausgefunden, dass die von der Pumplichtanordnung in das laseraktive Medium eingekoppelte Leistung, d.h. die Effektivität der Pumplichtanordnung, signifikant von der Wahl der optischen Weglänge bei der Umlenkung zwischen den Reflexionsbereichen abhängt. Hierbei hat sich gezeigt, dass ein ausgeprägtes Maximum der eingekoppelten Leistung bei einer optischen Weglänge erreicht wird, die deutlich abweicht vom Bereich der telezentrischen Abbildung, d.h. der doppelten Brennweite der Fokussiereinrichtung bei der Umlenkung zwischen zwei Reflexionsbereichen. Dieses Maximum wird typischer Weise (aber nicht zwingend) bei einer zusätzlichen optischen Weglänge erreicht, welche innerhalb eines Intervalls zwischen ca. einem Viertel der Brennweite und der gesamten Brennweite der Fokussiereinrichtung liegt. Insbesondere ist es günstig, wenn die zusätzliche optische Weglänge mindestens die Hälfte der Brennweite der Fokussiereinrichtung beträgt.

In einer weiteren Ausführungsform ist die Umlenkanordnung zur Umlenkung des Pumplichtstrahls zwischen jeweils zwei der gleich weit von der Mittelachse der Reflexionsfläche entfernten Reflexionsbereichen mit gleicher optischer Weglänge ausgebildet. Insbesondere wenn zur Umlenkung Prismen vorgesehen sind hat es sich als günstig erwiesen, alle Umlenkungen, die zwischen jeweils zwei der gleich weit von der Mittelachse entfernten Reflexionsbereichen vorgenommen werden, mit gleicher optischer Weglänge vorzunehmen, da in diesem Fall die Prismen bzw. Prismenpaare in einer gemeinsamen Ebene angeordnet werden können, was deren Handhabung vereinfacht. Es versteht sich aber, dass einzelne Prismen bzw. Prismenpaare nicht zwingend in demselben (optimierten) Abstand angeordnet werden müssen. Insbesondere wenn ein Prismenpaar näher und dafür ein anderes Prismenpaar weiter entfernt vom Parabolspiegel angeordnet wird, muss dies nicht zwingend zu einer nennenswerten Beeinträchtigung der Abbildungsqualität führen. Allerdings führt ein geringer Abstand der Prismen bzw. Prismenpaare zum Parabolspiegel ggf. zu Abschneideverlusten, zu deren Kompensation die Brennweite des Parabolspiegels vergrößert werden müsste, was eine Verkleinerung des effektiv genutzten Raumwinkels zur Folge hätte.

Bei der erfindungsgemäßen Pumplichtanordnung trifft der von einer Pumplichtquelle ausgehende Pumplichtstrahl typischer Weise kollimiert und mit kreisrundem Strahlquerschnitt parallel zur Mittelachse auf die z.B. als Paraboloid ausgebildete Reflexionsfläche auf. Die Reflexionsbereiche sind somit in einer Projektion auf eine Ebene senkrecht zur Mittelachse kreisförmig ausgebildet. Ist im Folgenden von kreisförmigen Reflexionsbereichen bzw. einer kreisförmigen Reflexionsfläche die Rede, bezieht sich dies jeweils auf die Projektion in eine Ebene senkrecht zur Mittelachse.

Bei einer Ausführungsform sind die Reflexionsbereiche in einem ersten, innen liegenden Ringbereich und einem zweiten, außen liegenden Ringbereich der Reflexionsfläche und ggf. in weiteren Ringbereichen angeordnet. Die Anordnung der Reflexionsbereiche in mehreren konzentrischen Kreisringen hat sich als günstig erwiesen, damit der Füllfaktor, d.h. der von den Reflexionsbereichen überdeckte Flächenbereich der Reflexionsfläche möglichst groß gewählt werden kann. Im Zentrum der Reflexionsfläche befindet sich hierbei typischer Weise kein Reflexionsbereich, sondern eine Durchtrittsöffnung für den beim Pumpen des laseraktiven Mediums erzeugten Laserstrahl. Die Größe der Reflexionsbereiche eines einzelnen Ringbereichs kann hierbei so gewählt werden, dass die Reflexionsbereiche voneinander beabstandet sind. Um die Flächenausnutzung zu optimieren kann die Größe der Reflexionsbereiche aber auch so gewählt werden, dass sich benachbarte Reflexionsbereiche jeweils in einem Punkt berühren. Die einzelnen Reflexionsbereiche sollen sich aber grundsätzlich nicht überlappen.

In einer Ausführungsform ist die optische Weglänge des Pumplichtstrahls bei der Umlenkung zwischen Reflexionsbereichen in dem ersten, innen liegenden Ringbereich kleiner als die optische Weglänge bei der Umlenkung des Pumplichtstrahls zwischen Reflexionsbereichen in dem zweiten, außen liegenden Ringbereich. Es hat sich herausgestellt, dass es bei der hier beschriebenen, nicht rein telezentrischen Abbildung günstig ist, wenn die optische Weglänge bei der Umlenkung zwischen Reflexionsbereichen in dem innen liegenden Ringbereich kleiner ist als die optische Weglänge bei der Umlenkung zwischen Reflexionsbereichen in dem äußeren Ringbereich. Bei einer solchen Auslegung der Pumplichtanordnung ist zu beachten, dass bei der Verwendung von Umlenkprismen als Umlenkeinrichtung eine Umlenkung des Pumplichtstrahls nur in azimutaler Richtung erfolgen sollte, d.h. nur zwischen Reflexionsbereichen ein- und desselben Ringbereichs. Dies deshalb, weil es bei einer Umlenkung, bei welcher der kollimierte Pumplichtstrahl durch das Zentrum der Pumpanordnung propagiert, in der Regel zu Abschneideverlusten durch den inneren Prismensatz kommt. Es versteht sich aber, dass bei der Verwendung von Umlenkeinrichtungen z.B. in Form von Faserbündeln auch eine Umlenkung in radialer Richtung in der Regel problemlos möglich ist.

Die Umlenkung kann z.B. mit Spiegeln, Umlenkprismen oder Faserbündeln erfolgen. Wird die Umlenkung mit herkömmlichen Spiegeln vorgenommen, entspricht die optische Weglänge der geometrischen Weglänge. Bei der Ausnutzung der Totalreflexion oder bei der Verwendung einer Faseranordnung zur Umlenkung des Pumpstrahls propagiert der Pumplichtstrahl hingegen durch ein optisches Medium, dessen Brechungsindex bei der Berechnung der optischen Weglänge mit zu berücksichtigen ist.

Werden Umlenkeinheiten in Form von Umlenkprismen oder Spiegeln verwendet, so liegen deren Schnittkanten bei der nicht rein telezentrischen Abbildung nicht in einer Ebene mit der Laserscheibe bzw. dem laseraktiven Medium, sondern sind weiter von der Fokussiereinrichtung entfernt. Hierbei sind die Umlenkeinheiten des äußeren Ringbereichs weiter von der Ebene mit der Laserscheibe beabstandet als die Umlenkeinheiten des inneren Ringbereichs. Wie oben beschrieben entsteht hierbei keine scharfe Abbildung, um die Divergenz des Pumplichtstrahls nicht zu erhöhen.

Bei der Umlenkung des Pumplichtstrahls zwischen zwei Reflexionsbereichen an radial unterschiedlich weit von der Mittelachse entfernten Ringbereichen einer (gekrümmten) Reflexionsfläche, z.B. einer (annähernd) parabelförmig gekrümmten Reflexionsfläche, tritt bei der Nutzung von Spiegeln oder Prismen zur Umlenkung ein weiteres Problem auf: Um ein unter einem Winkel zur optischen Achse angeordnetes Objekt (Laserscheibe bzw. Pumpfleck) mit maximaler Schärfe abzubilden, muss die so genannte Scheimpflug-Bedingung erfüllt sein, d.h. dass die Bildebene gedreht werden muss, damit dass Objekt wieder in sich selbst abgebildet werden kann. Bei der Umlenkung von einem Reflexionsbereich in einem radial äußeren Ringbereich in einen Reflexionsbereich in einem inneren Ringbereich (oder umgekehrt) ist diese Bedingung bei Verwendung eines Umlenkprismas oder Spiegels zur Umlenkung nicht mehr zwingend erfüllt. Auch dies führt zu einer Verbreiterung des Pumplichtstrahls.

Bei einer weiteren Ausführungsform weist die Umlenkanordnung eine Umlenkeinrichtung zur Umlenkung des Pumplichtstrahls zwischen einem Reflexionsbereich im ersten Ringbereich und einem Reflexionsbereich im zweiten Ringbereich auf, wobei die Umlenkeinrichtung zwei Spiegelflächen sowie eine Abbildungsoptik umfasst, die zur Einhaltung der Scheimpflug-Bedingung bei der Abbildung des Pumplichtstrahls durch die zwei der Umlenkung zugeordneten Fokussierungen an den Reflexionsbereichen ausgebildet sind. Die Abbildungsoptik weist reflektive oder transmittive abbildende Optiken, z.B. in Form von zwei Linsen, zur Verlängerung der optischen Weglänge auf, welche in Kombination mit geeignet angebrachten (planen) Spiegelflächen, welche in einem geeigneten Winkel zueinander und zum Strahlengang ausgerichtet sind, eine Verschiebung und Verkippung der Bildebene bewirken, die so gewählt ist, dass die Scheimpflug-Bedingung eingehalten werden kann, wenn der Pumpfleck bei den entsprechenden Fokussierungen auf sich selbst abgebildet wird.

Die Umlenkspiegel bzw. Umlenkprismen einer solchen Umlenkeinrichtung weisen hierbei einen Abstand zu der Ebene mit dem laseraktiven Medium auf, der sich typischer Weise von dem derjenigen Umlenkeinrichtungen unterscheidet, welche ausschließlich eine azimutale Umlenkung innerhalb eines jeweiligen Ringbereichs bewirken. Typischer Weise ist die optische Weglänge, welche der Pumplichtstrahl bei der Umlenkung zwischen dem inneren und dem äußeren Ringbereich zurücklegt, um die vierfache Brennweite (4f) größer als bei der azimutalen Umlenkung innerhalb der jeweiligen Ringbereiche. Es versteht sich aber, dass eine Umlenkeinrichtung zur radialen Umlenkung nicht zwingend die Scheimpflug-Bedingung erfüllen muss. So kann beispielsweise auch ein symmetrisches Umlenkprisma, dessen Spiegelflächen in einem rechten Winkel zueinander ausgerichtet sind zur radialen Umlenkung verwendet werden, wobei auf eine Abbildungsoptik verzichtet wird.

In einer vorteilhaften Weiterbildung weist der erste Ringbereich eine Anzahl von sechs Reflexionsbereichen auf. Dies hat sich als günstig erwiesen, um einen möglichst großen Füllfaktor zu erhalten. Bei einer solchen Anzahl an (kreisförmigen) Reflexionsbereichen kann nämlich erreicht werden, dass alle benachbarten Reflexionsbereiche unmittelbar aneinander angrenzen, so dass die zur Verfügung stehende Fläche optimal ausgenutzt werden kann.

In einer Weiterbildung weist der zweite Ringbereich eine Anzahl von zwölf Reflexionsbereichen auf. Insbesondere wenn der erste Ringbereich sechs (kreisförmige) Reflexionsbereiche aufweist, kann auch in diesem Fall die (kreisförmige) Reflexionsfläche optimal ausgenützt werden, d.h. der Füllfaktor weist bei dieser Anzahl an Reflexionsbereichen ein (lokales) Maximum auf.

Bei einer weiteren Weiterbildung weist die Reflexionsfläche einen dritten, radial außen liegenden Ringbereich auf, der bevorzugt eine Anzahl von achtzehn Reflexionsbereichen umfasst. Auch in diesem Fall erreicht der Füllfaktor bei einer solchen Anzahl von Reflexionsbereichen auf der Reflexionsfläche ein (lokales) Maximum. Es versteht sich, dass ggf. noch weitere Ringbereiche vorgesehen werden können, wobei durch eine geeignete Wahl der Anzahl der Reflexionsbereiche im jeweiligen Ringbereich die Flächenausnutzung maximiert werden kann.

Bei einer weiteren Ausführungsform weist die Reflexionsfläche eine asphärische Form, bevorzugt eine Parabelform, insbesondere eine asphärische Form, die geringfügig von der Parabelform abweicht, auf. Als Fokussiereinrichtung dient in der Regel ein Hohlspiegel, der typischer Weise eine (annähernd) parabolische Reflexionsfläche aufweist, um zu erreichen, dass der vom laseraktiven Medium an der (rotationssymmetrischen) Reflexionsfläche reflektierte Pumplichtstrahl kollimiert wird. Diese Funktion kann ggf. auch von anderen asphärischen Flächen erfüllt werden oder es kann ggf. eine Segmentbildung bzw. Facettierung des Hohlspiegels vorgenommen werden, wobei jede der Facetten jeweils einem der Reflexionsbereiche zugeordnet ist.

In einer Ausführungsform weist die Umlenkanordnung insbesondere für die azimutale Umlenkung (innerhalb eines Ringbereichs) mindestens eine Umlenkeinrichtung mit zwei spiegelsymmetrisch zu einer Symmetrieebene ausgerichteten Umlenkflächen auf, die bevorzugt an einem Prisma oder an mehreren Prismen gebildet sind. Die Umlenkeinrichtung kann hierbei als 180°-Umlenkprisma unter Ausnutzung von Totalreflexion an den als Umlenkflächen dienenden Kathetenflächen ausgebildet sein. Es ist aber auch möglich, z.B. zwei Prismen (oder ein Biprisma) mit verspiegelter Hypothenusenfläche als 180°-Umlenkeinrichtung zu verwenden. Alternativ können z.B. auch zwei Planspiegel zur Umlenkung verwendet werden, die unter einem Winkel von 90° zueinander angeordnet sind und sich ggf. an einer gemeinsamen Kante berühren.

Wie oben beschrieben können an Stelle von Umlenkeinrichtungen mit insbesondere zueinander senkrechten Umlenkflächen auch andere Arten von Umlenkeinrichtungen, z.B. Faserbündel, eingesetzt werden. Auch muss nicht zwingend wie oben beschrieben eine 180°-Umlenkung des Pumplichtstrahls vorgenommen werden. Grundsätzlich ist aber eine Umlenkung günstig, die lediglich eine Umlenkung der Richtung des Pumplichtstrahls zusammen mit einem Strahlversatz erzeugt, d.h. den Pumplichtstrahl parallel verschiebt.

Bei einer weiteren Ausführungsform weist die Umlenkanordnung eine Umlenkeinrichtung zur Umlenkung des Pumplichtstrahls in azimutaler Richtung zwischen den Reflexionsbereichen des ersten Ringbereichs und/oder des zweiten Ringbereichs auf. Eine solche Umlenkeinrichtung dient ausschließlich der Umlenkung des Pumplichtstrahls in azimutaler Richtung, wobei diese Umlenkeinheit auch so gestaltet sein kann, dass mit dieser ggf. auch eine radiale Umlenkung zwischen Reflexionsbereichen des ersten Ringbereichs und Reflexionsbereichen des zweiten Ringbereichs erfolgen kann. Es versteht sich, dass auch eine weitere Umlenkeinrichtung vorgesehen werden kann, welche den Pumplichtstrahl in sich selbst zurück reflektiert und welche z.B. durch einen in einer Ebene senkrecht zur Mittelachse angeordneten Planspiegel gebildet werden kann.

Bei einer weiteren Ausführungsform umfasst die Pumplichtanordnung eine Pumplichtquelle zur Erzeugung des Pumplichtstrahls. Die Pumplichtquelle erzeugt hierbei Pumplicht, welches an einer Strahlaustrittsfläche austritt, deren Durchmesser den minimalen Durchmesser des Pumplichtstrahls festlegt. Die Pumplichtquelle definiert auch die Divergenz (bzw. den Öffnungswinkel) des Pumplichtstrahls und legt damit das Strahlparameterprodukt des Pumplichtstrahls fest, welches definiert ist als Radius des Pumplichtstrahls x 0,5 x voller Öffnungswinkel (im Fernfeld).

Bei einer Weiterbildung ist im Strahlengang zwischen der Pumplichtquelle und der Reflexionsfläche eine Kollimationsoptik zum Kollimieren des Pumplichtstrahls angeordnet. Der kollimierte Pumplichtstrahl trifft auf die Reflexionsfläche und erzeugt dort einen in der Regel kreisförmigen Reflexionsbereich (engl. "spot"). Wie weiter oben beschrieben ist das Einstrahlen eines kollimierten Pumplichtstrahls auf die Reflexionsfläche günstig, da dieser nach der Fokussierung auf das laseraktive Medium von diesem zur Reflexionsfläche zurück reflektiert wird und von der (parabolförmigen) Reflexionsfläche kollimiert wird, so dass bei der Umlenkung der Strahldurchmesser nicht vergrößert wird.

Bei einer weiteren Ausführungsform ist der Durchmesser des aus der Pumplichtquelle austretenden Pumplichtstrahls halb so groß wie der Durchmesser des kollimierten Pumplichtstrahls. Auf diese Weise kann das Strahlparameterprodukt des verwendeten Pumplichts maximiert werden, wie im Folgenden für den Fall der Verwendung eines Parabolspiegels als Reflexionsfläche dargelegt wird:

Der Durchmesser der kollimierten Strahlung $D_{koll}$ steigt mit dem Durchmesser und Divergenzwinkel der Pumpquelle. Da aber nur ein begrenzter Platz für die kollimierte Pumpstrahlung auf der Reflexionsfläche (Parabolspiegel) zur Verfügung steht und der Durchmesser $D_{koll}$ über das Strahlparameterprodukt BPP, den Durchmesser der Pumpstrahlung $D_{pump}$ und die Brennweite des Parabolspiegels $f_{para}$ gegeben ist ($D_{koll} = 4 f_{para}/D_{pump}$ BPP $+D_{pump}$), ergibt sich für das maximale Strahlparameterprodukt BPPmax, welches einen Pumpquelle haben kann, um den maximal möglichen Durchmesser der kollimierten Strahlung $D_{koll}$ auf dem Parabolspiegel zu erhalten:

$$BPP_{MAX} = (D_{koll} - D_{pump}) * D_{pump} / (4 * f_{para}).$$

Die Brennweite des Parabolspiegels $f_{para}$ kann auch über $k * D_{pump}$ augedrückt werden, wobei k eine Konstante ist, die im Wesentlichen von den geometrischen Abmessungen der Umlenk-Prismen bzw. Spiegel und des Parabolspiegels abhängt. Bei vorgegebener Brennweite $f_{para}$ des Parabolspiegels kann man nach $D_{pump}$ ableiten und $BPP_{MAX}$ gleich Null setzen, um so das Maximum $D_{koll}=2D_{pump}$ zu erhalten.

Ein weiterer Aspekt der Erfindung betrifft einen Scheibenlaser, der ein laseraktives Medium sowie eine Pumplichtanordnung wie oben beschrieben aufweist. Es versteht sich, dass der Scheibenlaser (oder ggf. Scheibenlaserverstärker) auch einen Resonator aufweist, der z.B. zwischen einer verspiegelten Rückseite des laseraktiven Mediums (Laserscheibe) und einem Element zum Auskoppeln des Laserstrahls wie z.B. einen (teildurchlässigen) Auskoppelspiegel gebildet sein kann. Das laseraktive Medium des Scheibenlasers wird vom Pumplicht mehrfach durchsetzt, wobei auch bei einer Mehrzahl von Durchgängen Pumplicht mit verhältnismäßig großem Strahlparameterprodukt genutzt werden kann, so dass sich die Kosten für die Bereitstellung der Pumpstrahlung reduzieren. Durch die Erhöhung der Zahl der Mehrfachdurchgänge und der Verwendung einer nicht rein telezentrischen Abbildung kann gleichzeitig die Effizienz des Scheibenlasers gesteigert werden.

Die Erfindung betrifft auch ein Verfahren zum Pumpen eines laseraktiven Mediums der eingangs genannten Art, bei dem die zusätzliche optische Weglänge, welche über die optische Weglänge bei der telezentrischen Abbildung hinausgeht, mindestens ein Viertel der Brennweite der Fokussiereinrichtung beträgt, um eine durch Abbildungsfehler der Fokussiereinrichtung hervorgerufene Strahlaufweitung des Pumplichtstrahls bei aufeinanderfolgenden Fokussierungen auf das laseraktive Medium zu kompensieren. Wie oben beschrieben kann durch die nicht rein telezentrische Abbildung die Vergrößerung des Pumpflecks auf dem laseraktiven Medium bei aufeinander folgenden Fokussierungen (nahezu) vollständig kompensiert werden. Gegebenenfalls kann auch eine durch das laseraktive Medium hervorgerufene Strahlaufweitung des Pumplichtstrahls zusätzlich kompensiert werden, indem die optische Weglänge, die für die telezentrische Abbildung erforderlich ist, geeignet angepasst wird.

Die optische Weglänge des Pumplichtstrahls bei der Umlenkung zwischen jeweils zwei der Reflexionsbereiche kann derart gewählt werden, dass die in das laseraktive Medium eingekoppelte Leistung des Pumplichtstrahls (bei einer vorgegebenen Anzahl von Mehrfachdurchgängen) maximiert ist, d.h. die Effektivität der Einkopplung des Pumplichts ist maximal.

Bei einer weiteren Variante beträgt die zusätzliche optische Weglänge, welche über die optische Weglänge bei der telezentrischen Abbildung hinausgeht, mindestens die Hälfte der Brennweite der Fokussiereinrichtung (gegebenenfalls kann bereits mindestens ein Sechstel der Brennweite ausreichen). Wie weiter oben dargestellt wurde, ist die zusätzliche optische Weglänge, die benötigt wird, um die Abbildungsfehler der Fokussiereinrichtung wirksam zu kompensieren, vergleichsweise groß.

Die zusätzliche optische Weglänge, welche über die optische Weglänge bei der telezentrischen Abbildung hinausgeht, kann insbesondere in Abhängigkeit vom Durchmesser der Reflexionsfläche festgelegt werden. Wie weiter oben dargestellt wurde, hängt der Betrag der zusätzlichen optischen Weglänge unter anderem vom Durchmesser des Hohlspiegels bzw. der Reflexionsfläche ab. Auch Abweichungen von einer parabolischen Form des Hohlspiegels führen zu ggf. geringfügig anderen zusätzlichen optischen Weglängen. Gegebenenfalls kann auch bei der lokalen Formgebung des Spiegels gezielt von einer parabolischen Flächenform abgewichen werden, um die Abbildungsfehler und damit die Zahl der Umläufe weiter zu erhöhen.

Bei einer weiteren Variante wird die Fläche des Parabolspiegels angepasst, besonders vorteilhaft in Kombination mit einer der vorherigen Varianten. Hierbei wird von der Parabolischen Fläche abgewichen um die Abbildungsfehler weiter/ zu minimieren. Somit können mehr Durchgänge ermöglicht werden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:

Fig. 1　　　　eine Darstellung eines Scheibenlasers mit einer Pumplichtanordnung gemäß dem Stand der Technik,

Fig. 2      eine schematische Darstellung einer kreisförmigen Reflexionsfläche mit Reflexionsbereichen, die in unterschiedlichen Winkelbereichen um eine Mittelachse der Reflexionsfläche herum angeordnet sind,

Fig. 3      eine schematische Darstellung einer Reflexionsfläche mit einer zentrischen Öffnung und einem ersten Ringbereich mit sechs Reflexionsbereichen,

Fign. 4a,b      Darstellungen einer Reflexionsfläche mit einem zweiten Ringbereich mit zwölf bzw. einem dritten Ringbereich mit achtzehn Reflexionsbereichen,

Fign. 5a-c      Darstellungen der Reflexionsfläche von Fig. 4a mit drei unterschiedlich ausgebildeten Umlenkanordnungen zur Umlenkung des Pumplichtstrahls zwischen den Reflexionsbereichen,

Fig. 6      eine schematische Darstellung eines erfindungsgemäßen Scheibenlasers mit einer erfindungsgemäßen Pumplichtanordnung,

Fig. 7a      eine schematische Darstellung einer Umlenkeinrichtung einer Abbildungsoptik zur Einhaltung der Scheimpflug-Bedingung,

Fig. 7b      eine vereinfachte schematische Darstellung einer Umlenkeinrichtung zur Verdeutlichung einer Abbildungsoptik zur Einhaltung der Scheimpflug-Bedingung, und

Fign. 8a-c      Schaubilder der in ein laseraktives Medium eingekoppelten Pumpleistung in Abhängigkeit vom Abstand der Umlenkeinrichtungen zu einer Brennebene mit dem laseraktiven Medium.

**Fig. 1** zeigt einen Scheibenlaser 1, welcher ein laseraktives Medium 2 in Form einer Laserscheibe aufweist, die zur Kühlung auf einer Wärmesenke 3 angeordnet ist. An der der Wärmesenke 3 zugewandten Seite der Laserscheibe 2 ist eine reflektierende Beschichtung 2a aufgebracht, die zusammen mit einem teildurchlässigen Auskoppelspiegel 4 einen Resonator für durch Anregung des laseraktiven Mediums 2 erzeugte Laserstrahlung 5 bildet, welche den Resonator durch den teildurchlässigen Auskoppelspiegel 4 verlässt, wie in Fig. 1 durch einen Pfeil angedeutet ist.

Zur Anregung des laseraktiven Mediums 2 weist der Scheibenlaser 1 eine Pumplichtanordnung 6 mit einer Pumplichtquelle 7 auf, welche einen zunächst divergenten Pumplichtstrahl 8 erzeugt, der an einer in Fig. 1 zur Vereinfachung in Form einer einzelnen Linse 9 dargestellten Kollimationsoptik kollimiert wird. Der kollimierte Pumplichtstrahl 8 trifft auf eine Reflexionsfläche 10, welche an einem Hohlspiegel 11 gebildet ist. Die Reflexionsfläche 10 verläuft drehsymmetrisch zu einer Mittelachse 12 des Hohlspiegels 11 und ist parabelförmig gekrümmt, d.h. der Hohlspiegel 11 bildet einen Parabolspiegel. Der kollimierte Pumplichtstrahl 8 verläuft parallel zur Mittelachse 12 des Hohlspiegels 11. Der Hohlspiegel 11 weist weiterhin eine zentrische Öffnung 13 zum Durchtritt für die in dem laseraktiven Medium 2 erzeugte Laserstrahlung 5 auf.

Der kollimierte Pumplichtstrahl 8 wird an der parabolischen Reflexionsfläche 10 reflektiert und auf das im Brennpunkt bzw. der Brennebene des Hohlspiegels 11 (mit Brennweite f) angeordnete laseraktive Medium 2 fokussiert. Hierbei wird eine Strahlaustrittsfläche der Pumplichtquelle 7 auf das laseraktive Medium 2 in der Brennebene in einem Abbildungsmaßstab abgebildet, welcher durch die Brennweite f des Parabolspiegels 11 und die (nicht gezeigte) Brennweite der Kollimationslinse 9 definiert ist.

Der Pumplichtstrahl 8 wird nachfolgend an der reflektierenden Beschichtung 2a an der Rückseite des laseraktiven Mediums 2 reflektiert, trifft divergent auf die Reflexionsfläche 10 und wird an dieser nochmals reflektiert. Der reflektierte Pumplichtstrahl 8 wird aufgrund der parabelförmigen Geometrie der Reflexionsfläche 10 kollimiert und trifft nachfolgend auf eine Umlenkeinrichtung 14 in Form eines in einer Ebene senkrecht zur Mittelachse 12 angeordneten Planspiegels und wird an diesem in sich zurückreflektiert.

Beim oben im Zusammenhang mit Fig. 1 beschriebenen Pumpschema wurde noch nicht beschrieben, dass der Pumplichtstrahl 8 nach dem ersten Auftreffen auf die Reflexionsfläche 10 und dem letzten Auftreffen auf die Reflexionsfläche 10 mehrmals zwischen an der Reflexionsfläche 10 gebildeten, in unterschiedlichen Winkelbereichen um die Mittelachse 12 angeordneten Reflexionsbereichen umgelenkt wird. Diese Reflexionsbereiche B1 bis B8 können wie in Fig. 2 dargestellt im gleichen Abstand um die Mittelachse 12 herum angeordnet sein.

Der mittels der Linse 9 kollimierte Pumplichtstrahl 8 trifft an dem ersten Reflexionsbereich B1 auf die Reflexionsfläche 10, wird zunächst an dem laseraktiven Medium 2 reflektiert und trifft dann auf den zweiten Reflexionsbereich B2, wie in Fig. 2 durch einen gestrichelten Pfeil angedeutet ist. Vom zweiten Reflexionsbereich B2 wird der Pumplichtstrahl 8 mittels einer nicht gezeigten Umlenkeinrichtung z.B. in Form eines Prismas, welche Teil einer ebenfalls nicht gezeigten Umlenkanordnung ist, auf einen dritten Reflexionsbereich B3 umgelenkt. Von dort aus wird der Pumplichtstrahl 8 über die Laserscheibe 2 auf einen vierten Reflexionsbereich B4 reflektiert und von dort über eine weitere, nicht gezeigte Umlenkeinrichtung zu einen fünften Reflexionsbereich B5 umgelenkt, usw., bis der Pumplichtstrahl den achten Reflexionsbereich B8 erreicht hat, an dem er mittels des in Fig. 1 gezeigten Planspiegels 14 in sich zurück reflektiert wird. Für Details der Umlenkeinrichtung bei der in Fig. 2 dargestellten Anordnung der Reflexionsbereiche B1 bis B8 sei auf die eingangs zitierte EP 1 252 687 B1 verwiesen.

Bei der in Fig. 2 dargestellten Reflexionsfläche 10 sind die Reflexionsbereiche B1 bis B8 im gleichen Abstand zur Mittelachse 12 angeordnet und voneinander beabstandet. Offensichtlich wird bei dieser Art der Anordnung der auf der Reflexionsfläche 10 verfügbare Platz nicht optimal zur Reflexion genutzt, d.h. der Füllfaktor, welcher den Quotienten aus der zur Reflexion genutzten Fläche zur gesamten Oberfläche der Reflexionsfläche (in der in Fig. 2 gezeigten Projektion senkrecht zur Mittelachse 12) darstellt, ist verhältnismäßig gering.

Für einen gegebenen Radius r der Reflexionsbereiche und einen gegebenen Radius R1 der Reflexionsfläche kann der Füllfaktor deutlich erhöht werden, wenn benachbarte Reflexionsbereiche unmittelbar aneinander angrenzen, wie dies bei einer in **Fig. 3** gezeigten Reflexionsfläche 10 der Fall ist. Dort sind um die zentrale Öffnung 13 sechs Reflexionsbereiche B1 bis B6 angeordnet, welche jeweils unmittelbar aneinander angrenzen. Die zentrale Öffnung 13 weist hierbei denselben Radius r wie die Reflexionsbereiche B1 bis B6 auf, so dass sich ein Füllfaktor von $(7 \times \pi \times r^2) / (\pi (3r)^2) = 7 / 9$ ergibt (es gilt: $R1 = 3 r$). Die Reflexionsflächen B1 bis B6 von Fig. 3 bilden einen ersten Ringbereich RB1, der nach Innen von der zentrischen Öffnung 13 und nach Außen durch den Radius R1 der Reflexionsfläche 10 begrenzt wird.

Bei der in **Fig. 4a** gezeigten Reflexionsfläche 10 schließt sich an den ersten, inneren Ringbereich RB1 ein zweiter, äußerer Ringbereich RB2 an, in dem zwölf Reflexionsbereiche B7 bis B18 angeordnet sind, welche ebenfalls unmittelbar aneinander angrenzen, so dass der Füllfaktor bei der Anordnung der Reflexionsbereiche B1 bis B18 optimiert ist. Gleiches gilt für die in **Fig. 4b** gezeigte Reflexionsfläche 10, welche einen dritten Ringbereich RB3 aufweist, in dem weitere achtzehn Reflexionsbereiche B19 bis B36 angeordnet sind, welche ebenfalls unmittelbar aneinander angrenzen. Die drei in Fig. 3 sowie in Fign. 4a,b gezeigten Reflexionsflächen 10 weisen jeweils eine Anzahl von sechs, achtzehn und sechsunddreißig (kreisförmigen) Reflexionsbereichen auf. Bei dieser Anzahl von Reflexionsbereichen tritt jeweils ein (lokales) Maximum des Füllfaktors auf.

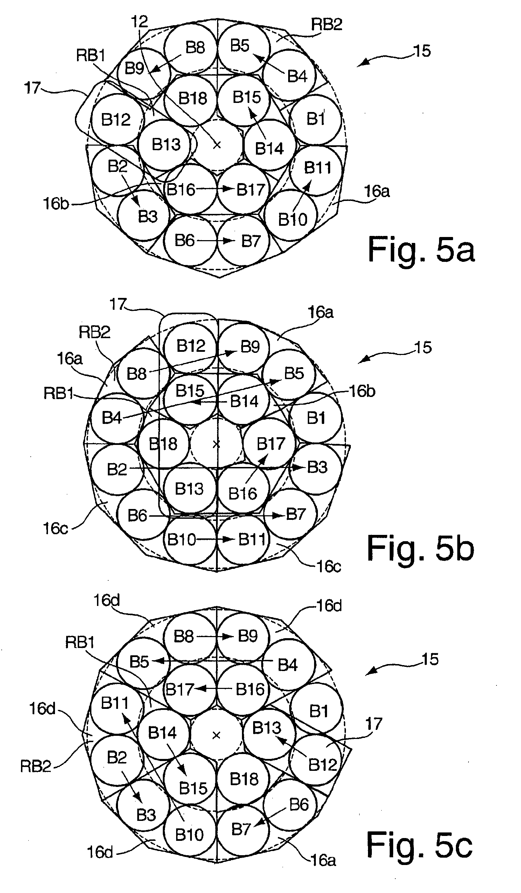

Um mit einem möglichst großen Strahlparameterprodukt bzw. einer möglichst geringen Strahlqualität des Pumplichtstrahls 8 auszukommen, ist ein Durchmesser $D_{PUMP}$ des aus der Pumplichtquelle 7 austretenden Pumplichtstrahls 8 halb so groß gewählt wie ein Durchmesser $D_{KOLL}$ des kollimierten Pumplichtstrahls 8. Nachfolgend werden im Zusammenhang mit **Fign. 5a-c** drei verschiedene Möglichkeiten beschrieben, wie die Umlenkung zwischen den achtzehn Reflexionsbereichen B1 bis B18 der Reflexionsfläche 10 von Fig. 4a realisiert werden kann, wobei die Reflexionsbereiche B1 bis B18 anders als in Fig. 4a entsprechend der Abfolge durchnummeriert sind, in der sie vom Pumplichtstrahl 8 durchlaufen werden, so dass der äußere Ringbereich RB2 die Reflexionsbereiche B1 bis B12 und der innere Ringbereich RB1 die Reflexionsbereiche B13 bis B18 aufweist.

Bei der in Fig. 5a gezeigten Variante ist eine Umlenkanordnung 15 der Pumplichtanordnung 6 dargestellt, bei welcher zwei Arten von Umlenkeinrichtungen 16a, 16b in Form von (Bi-)prismen verwendet werden: Fünf Biprismen 16a zur azimutalen Umlenkung zwischen jeweils benachbarten Reflexionsbereichen B2 bis B11 im äußeren Ringbereich RB2, sowie zwei Biprismen 16b zur azimutalen Umlenkung zwischen jeweils benachbarten Reflexionsbereichen B14 bis B17 im inneren Ringbereich RB1. Zusätzlich ist eine Umlenkeinrichtung 17 zur radialen Umlenkung des Pumplichtstrahls 8 vorgesehen, welche z.B. durch zwei Umlenkspiegel mit unter einem Winkel von 90° zueinander ausgerichteten (in Fig. 5a nicht gezeigten) Umlenkflächen oder durch ein Biprisma gebildet ist.

Bei der in Fig. 5b gezeigten Variante sind zwei Umlenkeinrichtungen 16c bzw. 16a, gebildet, welche jeweils zwei bezüglich einer Symmetrieebene spiegelsymmetrische Prismen aufweisen. Die erste Umlenkeinrichtung 16c dient der Umlenkung zwischen jeweils drei Reflexionsflächen des äußeren Ringbereichs RB2. Die zweite Umlenkeinrichtung 16a dient der Umlenkung zwischen jeweils zwei Reflexionsflächen des äußeren Ringbereichs RB2. Zwei weitere Umlenkeinrichtungen 16b dienen bei der in Fig. 5a gezeigten Variante der Umlenkung zwischen jeweils zwei benachbarten Reflexionsflächen B15 bis B17 des inneren Ringbereichs RB1. Wie in Fig. 5a dient eine Umlenkeinrichtung 17 in Form von zwei zueinander unter 90° ausgerichteten Umlenkspiegeln bzw. -flächen der Umlenkung zwischen einem Reflexionsbereich B12 des äußeren Ringbereichs RB2 und einem Reflexionsbereich B13 des inneren Ringbereichs RB1, die im Gegensatz zu Fig. 5a nicht unmittelbar in radialer Richtung aneinander angrenzen.

Bei der in Fig. 5c dargestellten Variante werden wie in Fig. 5b zwei Umlenkeinrichtungen 16d bzw. 16a verwendet, welche jeweils zwei bezüglich einer Symmetrieachse spiegelsymmetrische Prismen aufweisen. Die Umlenkeinrichtungen 16d dienen der azimutalen Umlenkung des Pumplichtstrahls 8 sowohl zwischen jeweils zwei Reflexionsbereichen des äußeren Ringbereichs RB1 als auch zwischen zwei benachbarten Reflexionsbereichen des inneren Ringbereichs RB2. Hierbei überdecken jeweils zwei Umlenkeinheiten 16d einen Winkelsektor von 120°.

In dem übrigen Winkelsektor von 120° ist eine weitere Umlenkeinrichtung 16a in Form eines Biprismas vorgesehen, welche der Umlenkung des Pumplichtstrahls 8 zwischen zwei benachbarten Reflexionsbereichen B6, B7 des äußeren Ringbereichs RB2 dient. Eine weitere Umlenkeinrichtung 17, welche der radialen Umlenkung zwischen einem Reflexionsbereich B12 des äußeren Ringbereichs RB2 und einem Reflexionsbereich B13 des inneren Ringbereichs RB1 dient, weist einen zur weiteren Umlenkeinrichtung 16a identischen Aufbau auf und ist ebenfalls als Biprisma ausgebildet.

Die in Fig. 5a dargestellte Umlenkanordnung 15 hat sich als besonders vorteilhaft erwiesen, da bei dieser so genannte Clipping-Effekte (Abschneideverluste) vermieden werden können. Diese treten bei der Umlenkung der Pumpstrahlung über die Mitte auf, wenn Prismen als Umlenkeinrichtungen für die Reflexionsbereiche B3 bis B18 im inneren Ringbereich RB1 näher am Parabolspiegel angeordnet sind als Prismen, die als Umlenkeinrichtungen für die Reflexionsbereiche B1 bis B12 im äußeren Ringbereich RB2 dienen.

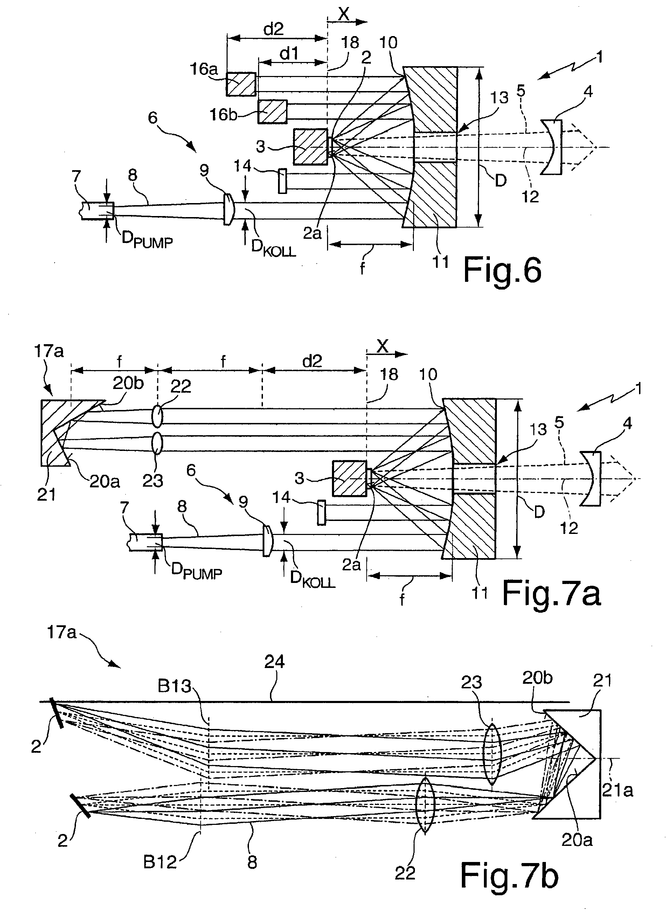

**Fig. 6** zeigt einen Scheibenlaser 1 mit einer Pumplichtanordnung 6, bei der Umlenkeinrichtungen 16a, 16b vom in Fig. 5a dargestellten Typ, d.h. in Form von Biprismen, vorgesehen sind, von denen zur Vereinfachung nur jeweils eine Umlenkeinrichtung 16a, 16b für jeden der beiden Ringbereiche RB2, RB1 dargestellt ist. Die Umlenkeinrichtungen 16a, 16b sind hierbei jeweils in einem Abstand d2 bzw. d1 von einer Brennebene 18 der Reflexionsfläche 10 angeordnet, der jeweils von einer gemeinsamen Grundseite der als (Bi-)Prismen ausgebildeten Umlenkeinrichtungen 16a, 16b ausgehend definiert ist.

Die Umlenkeinrichtungen 16a, 16b sind so angeordnet, dass die optische Weglänge, welche der Pumplichtstrahl 8 bei der Umlenkung zwischen jeweils zwei der Reflexionsbereiche B13 bis B18 bzw. B1 bis B12 (siehe Fig. 5a) zurücklegt, größer ist als die doppelte Brennweite 2 f des Hohlspiegels 11, da die optische Weglänge 2 f + 2 d2 bzw. 2 f +2 d1 beträgt.

Da für einen telezentrischen Strahlengang bei der Abbildung die optische Weglänge bei 2 f liegt, wird bei der in Fig. 6 gezeigten Pumplichtanordnung 6 von einer telezentrischen Abbildung abgewichen, d.h. die optische Weglänge ist größer als diejenige bei einer telezentrischen Abbildung. Die größere optische Weglänge dient dazu, eine Strahlaufweitung des Pumplichtstrahls 8 bei aufeinander folgenden Fokussierungen auf das laseraktive Medium 2 zu kompensieren bzw. zu verhindern.

Um dies zu erreichen, sind die Umlenkeinrichtungen 16a, 16b in unterschiedlichen Abständen d2, d1 von der Brennebene 18 angeordnet, wobei alle Umlenkeinrichtungen 16a zur azimutalen Umlenkung des Pumplichtstrahls 8 zwischen Reflexionsflächen B1 bis B12 in dem äußeren Ringbereich RB2 (vgl. Fig. 5a) denselben Abstand d2 zur Brennebene 18 aufweisen. Entsprechend sind alle Umlenkeinrichtungen 16b zur azimutalen Umlenkung des Pumplichtstrahls 8 zwischen Reflexionsflächen B13 bis B18 in dem inneren Ringbereich RB1 in gleichem (kleinerem) Abstand d1 zur Brennebene 18 angeordnet.

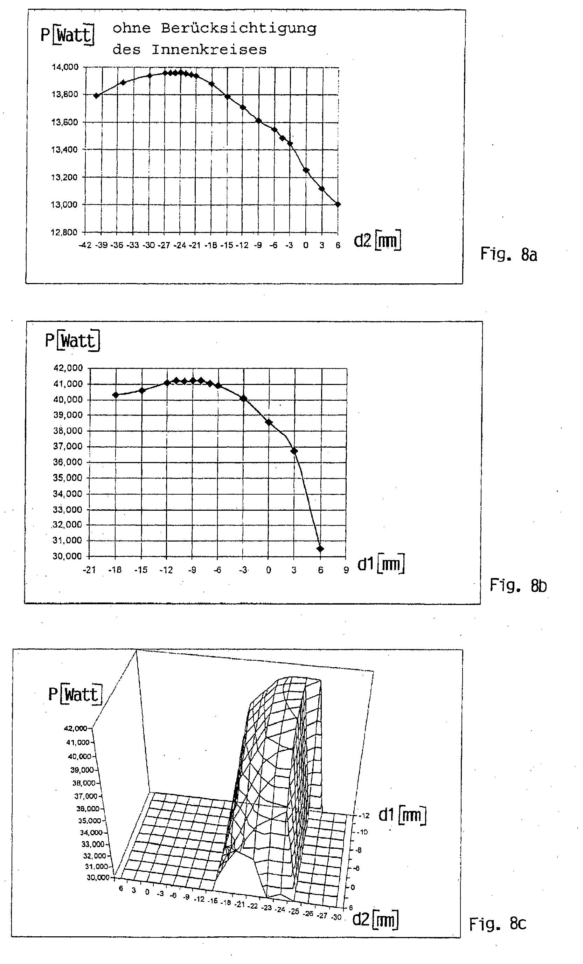

Dies hat sich als günstig erwiesen, um bei einer vorgegebenen Anzahl von Durchgängen die in das laseraktive Medium 2 eingekoppelte Leistung des Pumplichtstrahls 8 zu maximieren, da diese vom jeweiligen Abstand d2, d1 der Umlenkeinrichtungen 16a, 16b zur Brennebene 18 abhängig ist. Dieser Zusammenhang wird nachfolgend anhand von in **Fign. 8a-c** dargestellten Schaubildern näher erläutert, welche die Effizienz, d.h. die in das laseraktive Medium 2 eingekoppelte (Ausgangs-)Leistung P (in Watt) bei einer Eingangsleistung der Pumplichtquelle 7 von 1 W in Abhängigkeit vom jeweiligen Abstand d1 bzw. d2 (in mm) zeigen, wobei ein negatives Vorzeichen des Abstands d1, d2 eine Entfernung von der Brennebene 11 in negativer X-Richtung (vgl. Fig. 6) entspricht, wobei die Brennebene 18 die Koordinate x=0 aufweist.

Die in Fig. 8a-c dargestellten Schaubilder basieren auf Simulationsrechnungen, bei denen eine Pumplichtanordnung in Form einer 44-fach-Kavität mit acht Reflexionsbereichen in einem inneren Ringbereich und vierzehn Reflexionsbereichen in einem äußeren Ringbereich simuliert wurde. Bei dem Schaubild von Fig. 8a ist die Leistung P in Abhängigkeit vom Abstand d2 bei Vorhandensein lediglich der äußeren Umlenkeinrichtungen 16a dargestellt, d.h. ohne Berücksichtigung der inneren Umlenkeinrichtungen 16b, wobei auch der Endspiegel 14 nicht berücksichtigt wurde.

In Fig. 8b wurde die gesamte Umlenkanordnung 15 mit allen Umlenkeinrichtungen 16a, 16b sowie mit dem Endspiegel 14 simuliert, wobei in Fig. 8b die Abhängigkeit der Leistung P bzw. der Effizienz vom Abstand d1 der inneren Umlenkeinrichtungen 16b von der Brennebene 18 bzw. der Ebene mit dem laseraktiven Medium 2 dargestellt ist. Fig. 8c zeigt schließlich die Abhängigkeit der Leistung P von beiden Abständen d1, d2 in einer dreidimensionalen Ansicht.

Wie Fign. 8a-c zu entnehmen ist, liegt der Bereich maximaler Leistung P bzw. Effizienz bei den gezeigten Simulationsergebnissen in einem Bereich von | d1 | > 8 mm und 25 mm > | d2 | > 15 mm. Geeignete Werte der Abstände d1, d2 hängen aber von den geometrischen Gegebenheiten, unter anderem der Brennweite f (hier: Brennweite f = 80 mm) und dem Durchmesser D des Hohlspiegels 11 (genauer gesagt dem Durchmesser D der Reflexionsfläche 10, an der die Reflexionsbereiche gebildet sind) ab (hier: D = 150 mm), so dass die in Fig. 8a-c beschriebenen Ergebnisse (bezüglich des Betrags der Abstände) nicht ohne weiteres verallgemeinert werden können. Auffällig ist jedoch, dass die Abstände d1, d2, bei denen eine maximale Leistung erzeugt wird, signifikant von der Konfiguration bei einer telezentrischen Abbildung (d.h. d1 = 0, d2 =0) abweichen. Es hat sich als günstig erwiesen, wenn die zusätzliche optische Weglänge, welche über die telezentrische Abbildung hinaus geht (d.h. 2 d1 bzw. 2 d2) mindestens ein Viertel, bevorzugt mindestens die Hälfte der Brennweite f des Parabolspiegels beträgt. In der Regel ist die zusätzliche optische Weglänge nicht größer als die Brennweite f des Parabolspiegels 11.

Bei den obigen Simulationsrechnungen wurde der Effekt, den die statische Krümmung (ca. 2.2 m) der Laserscheibe ausübt, berücksichtigt. Nicht berücksichtigt wurde lediglich die (dynamische) Änderung der Krümmung der Laserscheibe 2, die im Betrieb durch thermische Effekte hervorgerufen wird. Diese können ggf. zu einer Veränderung der für die telezentrische Abbildung benötigten Weglänge führen, die zusätzlich kompensiert werden kann, beispielsweise auf die in der eingangs zitierten Dissertation von S. Erhard beschriebene Art und Weise. Allerdings ist die thermische Brechkraftänderung sehr gering (im Bereich von 0,04 dpt bis ca. 0,1 dpt). Die statische Brechkraft der Scheibe liegt hingegen im Bereich von ca. 0,6 dpt bis 0,9 dpt, während die Brechkraft des Parabolspiegels bei ca. 25 dpt liegt.

Bei der Verwendung von mehreren Ringbereichen RB1-RBn, im Folgenden beispielhaft für zwei Ringbereiche RB1, RB2 erläutert, tritt bei der Umlenkeinrichtung 17 (vgl. Fig. 5a), welche zur Umlenkung des Pumplichtstrahls 8 zwischen einem Reflexionsbereich B13 im ersten Ringbereich RB1 und einem Reflexionsbereich B12 im zweiten Ringbereich RB2 dient, das Problem auf, dass die parabolisch gekrümmte Reflexionsfläche 10 das laseraktive Medium 2 bzw. den dort gebildeten Pumpfleck nicht mit maximaler Schärfe abbildet, da hierzu die so genannte Scheimpflug-Bedingung erfüllt sein müsste, d.h. dass die Bildebene gedreht werden muss, so dass das Objekt (Pumpfleck auf der Scheibe) wieder in sich selbst abgebildet werden kann, was bei Verwendung einer Umlenkeinrichtung 17, welche lediglich Spiegelflächen bzw. Prismenflächen aufweist, die in einem Winkel von 90° zueinander stehen und eine Symmetrieebene besitzen, nicht möglich ist.

**Fig. 7a** zeigt einen Aufbau einer Umlenkeinrichtung 17a, welcher die Scheimpflug-Bedingung erfüllt und bei welcher die Bildebene bei Verwendung eines Parabolspiegels 11 gedreht wird. Um diese Korrektur vornehmen zu können, muss die optische Weglänge (z.B. um 4f) verlängert werden, um eine Zwischen-Bildebene zu erzeugen. Dies wird im gezeigten Aufbau über das Einbringen von zwei Kollimationslinsen 22, 23 in den Strahlengang gelöst. Der Übersichtlichkeit halber wurde bei Fig. 7a nur ein Strahlenbündel gezeigt. Daher ist die erzeugte Zwischen-Bildebene in diesem Fall nur ein Punkt. Die Umlenkeinrichtung 17a weist auch ein Biprisma 21 mit zwei Spiegelflächen 20a, 20b auf. Das Biprisma 21 besitzt keine Symmetrieebene und die Winkel, unter denen die Spiegelflächen 20a, 20b zur Strahlachse (X-Richtung) und zueinander stehen, sind derart angepasst, dass eine scharfe Abbildung an der Laserscheibe entsteht. Der bzw. die Winkel zur Anpassung hängen vom Einfallswinkel der vom Parabolspiegel 11 reflektierten Pumpstrahlung auf die Laserscheibe 2 ab. Die Umlenkeinrichtung 17a bewirkt bei geeignet gewählten Winkeln die Drehung der Bildebene und die Zurückführung zum selben Ort bei der Umlenkung zwischen den Ringbereichen RB1, RB2.

Bei dem in Fig. 7a gezeigten Aufbau ist die Umlenkung zwischen den Ringbereichen RB1, RB2 telezentrisch und die Umlenkung innerhalb eines Ringbereichs RB1 bzw. RB2 nicht telezentrisch ausgebildet. Die Umlenkeinheiten 16a und 16b für die Umlenkung innerhalb der Ringbereiche sind zur besseren Übersicht nicht gezeigt, ihre Position ist gleich der in Abb. 6 gezeigten. Es gibt aber auch die Möglichkeit, die Umlenkung zwischen den Ringbereichen RB1, RB2 nicht telezentrisch auszubilden. Der Vorteil der nicht telezentrischen Abbildung wirkt sich aber vor allem bei einer Vielzahl von Durchgängen aus, wie sie z.B. bei der Umlenkung innerhalb eines jeweiligen Ringbereichs RB1 bzw. RB2 auftritt.

**Fig. 7b** dient zur Verdeutlichung der Drehung der Bildebene, um die Scheimpflug-Bedingung bei Verwendung eines Parabolspiegels 11 zu erfüllen. Hier ist eine vereinfachte Darstellung gewählt, bei welcher der Hohlspiegel 11 durch zwei Linsen B12 und B13 ersetzt wurde, welche in der Realität Reflexionsbereichen auf dem Hohlspiegel 11 entsprechen. Dies führt dazu, dass das Lasermedium 2 in der Darstellung von Fig. 7b zwei Positionen erhält, in der Realität (mit Hohlspiegel) jedoch wie in Fig. 7a gezeigt an einem Ort auf der Seite der Umlenkprismen sitzt. Die Umlenkeinrichtung 17a, weist wie in Fig. 7a gezeigt zwei symmetrisch zu einer Ebene 21a ausgerichtete Umlenkflächen 20a, 20b auf, die an einem Bi-Prisma 21 gebildet sind und sich entlang einer gemeinsamen Grundlinie berühren. Die Umlenkeinrichtung 17a weist weiterhin eine Abbildungsoptik in Form von zwei Linsen 22, 23 auf, welche zur Verlängerung der optischen Weglänge dienen, um die Korrektur für die Scheimpflug-Bedingung durchführen zu können.

Das in Fig. 7b rechts unten dargestellte, zu einer optischen Achse 24 der Abbildungsoptik 22, 23 unter einem Winkel angeordnete laseraktive Medium 2 wird an einem ersten Reflexionsbereich B12 des Hohlspiegels 11, welcher zur Vereinfachung als Linse dargestellt ist, umgelenkt (hier transmittiert) und dabei kollimiert. Der kollimierte Pumplichtstrahl 8 wird von der ersten Linse 22 auf die erste Umlenkfläche 20a abgebildet, die hier als Bildebene dient. Diese wird mit Hilfe der zweiten Umlenkfläche 20b gekippt und anschließend mittels der zweiten Linse 23 unter einem anderen Winkel abgebildet, so dass nach der Reflexion an einer (inneren) Reflexionsfläche B13 des Hohlspiegels 11 ein Bild des laseraktiven Mediums 2 an einem anderen Ort und mit anderer Bildlage entsteht und die Scheimpflug-Bedingung eingehalten ist.

Wie bereits weiter oben beschrieben wurde kann die Umlenkeinrichtung 17a zur Umlenkung zwischen den Ringbereichen RB1, RB2 alternativ auch so gestaltet werden, dass nicht wie im Zusammenhang mit Fig. 7a,b beschrieben eine telezentrische Abbildung entsteht, sondern eine Aufweitung der Pumplichtstrahlung unterdrückt wird, indem eine nicht telezentrische Abbildung gewählt wird.

Bei den oben beschriebenen Umlenkanordnungen 15 wird jeweils lediglich ein einziges Mal eine Umlenkung zwischen den unterschiedlichen Ringbereichen RB1, RB2 vorgenommen. Es versteht sich aber, dass ggf. eine radiale Umlenkung des Pumplichtstrahls 8 zwischen den Ringbereichen RB1, RB2 auch mehrfach vorgenommen werden kann, wobei in diesem Fall eine nicht telezentrische Abbildung zur Unterdrückung der Aufweitung der Pumplichtstrahlung von Vorteil ist. Bei den oben beschriebenen Umlenkanordnungen 15 erfolgt zudem die Einkopplung des kollimierten Pumplichtstrahls 8 der Pumplichtquelle 7 jeweils in den äußeren Ringbereich RB2 und die Auskopplung bzw. Rückreflexion erfolgt im inneren Ringbereich RB1. Es versteht sich aber, dass der umgekehrte Fall ebenso möglich ist, d.h. eine Einkopplung im inneren Ringbereich RB1 und eine Rückreflexion im äußeren Ringbereich RB2. Alternativ kann sowohl die Einkopplung als auch die Auskopplung in ein- und demselben Ringbereich RB1 bzw. RB2 erfolgen.

Es versteht sich weiterhin, dass die Umlenkanordnung 15 nur der Vereinfachung halber im Zusammenhang mit zwei Ringbereichen RB1, RB2 beschrieben wurde und dass eine geeignet angepasste Umlenkanordnung 15 ebenso bei der Verwendung einer Reflexionsfläche 10 mit drei (vgl. Fig. 4b) oder mit mehr Ringbereichen möglich ist.

## Patentansprüche

1. Pumplichtanordnung (6) für einen Scheibenlaser (1), umfassend:

    eine Fokussiereinrichtung, insbesondere einen Hohlspiegel (11), mit einer Reflexionsfläche (10) zur Fokussierung eines beim Eintritt in die Pumplichtanordnung (6) kollimierten Pumplichtstrahls (8) auf ein laseraktives Medium in Form einer Laserscheibe (2), die in einem Brennpunkt der Fokussiereinrichtung angeordnet ist, sowie eine Umlenkanordnung (15) zur Umlenkung des Pumplichtstrahls (8) zwischen an der Reflexionsfläche (10) gebildeten Reflexionsbereichen (B1 bis B12), die in unterschiedlichen Winkelbereichen um eine Mittelachse (12) der Reflexionsfläche (10) herum angeordnet sind, wobei die Umlenkeinrichtung (15) ausgebildet ist, eine Umlenkung des Pumplichtstrahls (8) zwischen jeweils zwei der Reflexionsbereiche (B1 bis B12) mit einer optischen Weglänge (2f + 2 d1; 2f + 2 d2) zu erzeugen, die größer als die der doppelten Brennweite (2 f) der Fokussiereinrichtung (11) entsprechende optische Weglänge (2f) bei einer telezentrischen Abbildung ist, **dadurch gekennzeichnet**, dass die zusätzliche optische Weglänge (2 d1; 2 d2), welche über die optische Weglänge (2f) bei der telezentrischen Abbildung hinausgeht, mindestens ein Viertel der Brennweite (f) der Fokussiereinrichtung (11) beträgt, um eine durch Abbildungsfehler der Fokussiereinrichtung (11) hervorgerufene Strahlaufweitung des Pumplichtstrahls (8) bei aufeinander folgenden Fokussierungen auf das laseraktive Medium (2) zu kompensieren.

2. Pumplichtanordnung nach Anspruch 1, **dadurch gekennzeichnet, dass** die zusätzliche optische Weglänge (2 d1; 2 d2), welche über die optische Weglänge (2f) bei der telezentrischen Abbildung hinausgeht, mindestens die Hälfte der Brennweite (f) der Fokussiereinrichtung (11) beträgt.

3. Pumplichtanordnung nach Anspruch 1 oder 2, **dadurch gekennzeichnet, dass** die Umlenkanordnung (15) zur Umlenkung des Pumplichtstrahls (8) zwischen unterschiedlich weit von der Mittelachse (12) der Reflexionsfläche (10) entfernten Reflexionsbereichen (B1 bis B12; B13 bis B18) ausgebildet ist.

4. Pumplichtanordnung nach einem der vorhergehenden Ansprüche, bei der die Umlenkanordnung (15) zur Umlenkung des Pumplichtstrahls (8) zwischen jeweils zwei der gleich weit von der Mittelachse (12) der Reflexionsfläche (10) entfernten Reflexionsbereichen (B1 bis B12; B13 bis B18) mit gleicher optischer Weglänge (2f + 2 d1; 2f + 2 d2) ausgebildet ist.

5. Pumplichtanordnung nach einem der vorhergehenden Ansprüche, bei der die Reflexionsbereiche (B13 bis B18; B1 bis B12) in einem ersten, innen liegenden Ringbereich (RB1) und einem zweiten, außen liegenden Ringbereich (RB2) der Reflexionsfläche (10) angeordnet sind.

6. Pumplichtanordnung nach Anspruch 5, bei der die optische Weglänge (2 f + 2 d1) des Pumplichtstrahls (8) bei der Umlenkung zwischen zwei Reflexionsbereichen (B13 bis B18) in dem ersten, innen liegenden Ringbereich (RB1) kleiner ist als die optische Weglänge (2f + 2 d2) bei der Umlenkung des Pumplichtstrahls (8) zwischen zwei Reflexionsbereichen (B1 bis B12) in dem zweiten, außen liegenden Ringbereich (RB2).

7. Pumplichtanordnung nach einem der Ansprüche 5 oder 6, bei welcher die Umlenkanordnung (15) eine Umlenkeinrichtung (17a) zur Umlenkung des Pumplichtstrahls (8) zwischen einem Reflexionsbereich (B13) im ersten Ringbereich (RB1) und einem Reflexionsbereich (B12) im zweiten Ringbereich (RB2) aufweist, wobei die Umlenkeinrichtung (17a) zwei Spiegelflächen (20a, 20b) sowie eine Abbildungsoptik (22, 23) aufweist, die zur Einhaltung der Scheimpflug-Bedingung bei der Abbildung des Pumplichtstrahls (8) durch die zwei der Umlenkung zugeordneten Fokussierungen an den Reflexionsbereichen (B13, B12) ausgebildet sind.

8.  Pumplichtanordnung nach einem der vorherigen Ansprüche, bei welcher der erste Ringbereich (RB1) eine Anzahl von sechs Reflexionsbereichen (B13 bis B18) aufweist.

9.  Pumplichtanordnung nach einem der Ansprüche 5 bis 8, bei welcher der zweite Ringbereich (RB2) eine Anzahl von zwölf Reflexionsbereichen (B1 bis B12) aufweist.

10. Pumplichtanordnung nach einem der Ansprüche 5 bis 9, bei welcher die Reflexionsfläche (10) einen dritten, radial außen liegenden Ringbereich (RB3) aufweist, der bevorzugt eine Anzahl von achtzehn Reflexionsbereichen (B19 bis B36) umfasst.

11. Pumplichtanordnung nach einem der vorhergehenden Ansprüche, bei welcher die Reflexionsfläche (10) eine asphärische Form, insbesondere eine Parabelform, aufweist.

12. Pumplichtanordnung nach einem der vorhergehenden Ansprüche, bei welcher die Umlenkanordnung (15) mindestens eine Umlenkeinrichtung (16a-16d, 17) mit zwei spiegelsymmetrisch zu einer Symmetrieebene (21a) ausgerichteten Umlenkflächen (20a, 20b) aufweist, die bevorzugt an einem oder an mehreren Prismen (21) gebildet sind.

13. Pumplichtanordnung nach einem der Ansprüche 5 bis 12, bei der die Umlenkanordnung (15) eine Umlenkeinrichtung (16a-16d) zur Umlenkung des Pumplichtstrahls (8) in azimutaler Richtung zwischen den Reflexionsbereichen (B13 bis B18) des ersten Ringbereichs (RB1) und/oder den Reflexionsbereichen (B1 bis B12) des zweiten Ringbereichs (RB2) aufweist.

14. Pumplichtanordnung nach einem der vorhergehenden Ansprüche, weiter umfassend eine Pumplichtquelle (7) zur Erzeugung des Pumplichtstrahls (8).

15. Pumplichtanordnung nach Anspruch 14, weiter umfassend eine im Strahlengang zwischen der Pumplichtquelle (8) und der Reflexionsfläche (10) angeordnete Kollimationsoptik (9) zur Kollimierung des Pumplichtstrahls (8).

16. Pumplichtanordnung nach Anspruch 15, bei welcher ein Durchmesser ($D_{Pump}$) des aus der Pumplichtquelle (7) austretenden Pumplichtstrahls (8) halb so groß ist wie ein Durchmesser ($D_{koll}$) des kollimierten Pumplichtstrahls (8).

17. Scheibenlaser (1), umfassend ein laseraktives Medium (2), sowie eine Pumplichtanordnung (6) nach einem der vorhergehenden Ansprüche.

18. Verfahren zum Pumpen eines laseraktiven Mediums (2), umfassend:

Mehrmaliges Fokussieren eines beim ersten Fokussieren kollimierten Pumplichtstrahls (8) auf das laseraktive Medium (2) mittels einer Fokussiereinrichtung, insbesondere eines Hohlspiegels (11), wobei das laseraktive Medium in Form einer Laserscheibe (2) im Brennpunkt der Fokussiereinrichtung angeordnet ist, wobei zwischen aufeinander folgenden Fokussierungsschritten eine Umlenkung des Pumplichtstrahls (8) zwischen unterschiedlichen Reflexionsbereichen (B1 bis B12) einer Reflexionsfläche (10) der Fokussiereinrichtung (11) erfolgt, die in unterschiedlichen Winkelbereichen um eine Mittelachse (12) der Reflexionsfläche (10) herum angeordnet sind, wobei die Umlenkung des Pumplichtstrahls (8) zwischen jeweils zwei der Reflexionsbereiche (B1 bis B12, B13 bis B18) mit einer optischen Weglänge (2f + 2 d1; 2f + 2 d2) erfolgt, die größer als die der doppelten Brennweite (2 f) der Fokussiereinrichtung (11) entsprechende optische Weglänge (2 f) bei einer telezentrischen Abbildung (10) ist, **dadurch gekennzeichnet**, dass die zusätzliche optische Weglänge (2 d1; 2 d2), welche über die optische Weglänge (2f) bei der telezentrischen Abbildung hinausgeht, mindestens ein Viertel der Brennweite (f) der Fokussiereinrichtung (11) beträgt, um eine durch Abbildungsfehler der Fokussiereinrichtung (11) hervorgerufene Strahlaufweitung des Pumplichtstrahls (8) bei der Fokussierung auf das laseraktive Medium (2) zu kompensieren.

19. Verfahren nach Anspruch 18, bei dem eine Umlenkung des Pumplichtstrahls (8) zusätzlich zwischen unterschiedlich weit von der Mittelachse (12) der Reflexionsfläche (10) entfernten Reflexionsbereichen (B1 bis B12, B13 bis B18) erfolgt.

20. Verfahren nach einem der Ansprüche 18 oder 19, bei dem die zusätzliche optische Weglänge (2 d1; 2 d2), welche über die optische Weglänge (2f) bei der telezentrischen Abbildung hinausgeht, mindestens die Hälfte der Brennweite (f) der Fokussiereinrichtung (11) beträgt.

**Claims**

1.  Pump light assembly (6) for a disc laser (1), comprising:

a focusing device, in particular a concave mirror (11), having a reflecting surface (10) for focusing a pump light beam (8), which is collimated upon entry into the pump light assembly (6), onto a laser-active medium in the form of a laser disc (2) which is arranged in a focus of the focusing device, and also a deflecting device (15) for deflecting the pump light beam (8) between reflecting regions (B1 to B12) formed on the reflecting surface (10) and disposed in different angular regions about a central axis (12) of the reflecting surface (10),

wherein the deflecting device (15) is configured to produce a deflection of the pump light beam (8) between in each case two of the reflecting regions (B1 to B12) with an optical path length (2f + 2 d1; 2f + 2 d2) that is greater than the optical path length (2f) that corresponds to twice the focal length (2f) of the focusing device (11) in the case of telecentric imaging, **characterized in that** the additional optical path length (2 d1; 2 d2), which is greater than the optical path length (2f) in the case of telecentric imaging, is at least one quarter of the focal length (f) of the focusing device (11) in order to compensate for a beam expansion of the pump light beam (8), caused by aberrations of the focusing device (11), in successive focusings onto the laser-active medium (2).

2. Pump light assembly according to claim 1, **characterised in that** the additional optical path length (2 d1; 2 d2) in excess of the optical path length (2f) in the case of telecentric imaging is at least half of the focal length (f) of the focusing device (11).

3. Pump light assembly according to claim 1 or 2, **characterised in that** the deflecting assembly (15) is configured for deflection of the pump light beam (8) between reflecting regions (B1 to B12; B13 to B18) disposed at different distances from the central axis (12) of the reflecting surface (10).

4. Pump light assembly according to any one of the preceding claims, in which the deflecting assembly (15) is configured for deflection of the pump light beam (8) between in each case two of the reflecting regions (B1 to B12; B13 to B18) disposed at the same distance from the central axis (12) of the reflecting surface (10) with the same optical path length (2f + 2 d1; 2f + 2 d2).

5. Pump light assembly according to any one of the preceding claims, in which the reflecting regions (B13 to B18; B1 to B12) are disposed in a first, inner ring region (RB1) and in a second, outer ring region (RB2) of the reflecting surface (10).

6. Pump light assembly according to claim 5, in which the optical path length (2 f + 2 d1) of the pump light beam (8) in the deflection between two reflecting regions (B13 to B18) in the first, inner ring region (RB1) is less than the optical path length (2 f + 2 d2) in the deflection of the pump light beam (8) between two reflecting regions (B1 to B12) in the second, outer ring region (RB2).

7. Pump light assembly according to either of claims 5 and 6, in which the deflecting assembly (15) has a deflecting device (17a) for deflection of the pump light beam (8) between a reflecting region (B13) in the first ring region (RB1) and a reflecting region (B12) in the second ring region (RB2), the deflecting device (17a) having two mirror surfaces (20a, 20b) and imaging optics (22, 23) which are configured for meeting the Scheimpflug condition in the imaging of the pump light beam (8) at the reflecting regions (B13, B12) by the two focusing operations associated with the deflection.

8. Pump light assembly according to any one of the preceding claims, in which the first ring region (RB1) has a number of six reflecting regions (B13 to B18).

9. Pump light assembly according to any one of claims 5 to 8, in which the second ring region (RB2) has a number of twelve reflecting regions (B1 to B12).

10. Pump light assembly according to any one of claims 5 to 9, in which the reflecting surface (10) has a third, radially outer ring region (RB3) which preferably comprises a number of eighteen reflecting regions (B19 to B36).

11. Pump light assembly according to any one of the preceding claims, in which the reflecting surface (10) has an aspherical shape, in particular a parabolic shape.

12. Pump light assembly according to any one of the preceding claims, in which the deflecting assembly (15) has at least one deflecting device (16a-16d, 17) with two deflecting surfaces (20a, 20b) which are oriented mirror-symmetrically with respect to a plane of symmetry (21a) and are preferably formed on one or more prisms (21).

13. Pump light assembly according to any one of claims 5 to 12, in which the deflecting assembly (15) has a deflecting device (16a-16d) for deflection of the pump light beam (8) in the azimuthal direction between the reflecting regions (B13 to B18) of the first ring region (RB1) and/or the reflecting regions (B1 to B12) of the second ring region (RB2).

14. Pump light assembly according to any one of the preceding claims, further comprising a pump light source (7) for generating the pump light beam (8).

**15.** Pump light assembly according to claim 14, further comprising a collimation optics (9) arranged in the beam path between the pump light source (7) and the reflecting surface (10) for collimation of the pump light beam (8).

**16.** Pump light assembly according to claim 15, in which a diameter ($D_{Pump}$) of the pump light beam (8) emerging from the pump light source (7) is half as great as a diameter ($D_{koll}$) of the collimated pump light beam (8).

**17.** Disc laser (1), comprising a laser-active medium (2), and a pump light assembly (6) according to any one of the preceding claims.

**18.** Method for pumping a laser-active medium (2), comprising:

repeatedly focusing a pump light beam (8), which is collimated upon initial focusing, onto the laser-active medium (2) by means of a focusing device, especially a concave mirror (11), wherein the laser-active medium is arranged in the form of a laser disc (2) in the focus of the focusing device, wherein between successive focusing steps a deflection of the pump light beam (8) between different reflecting regions (B1 to B12) of a reflecting surface (10) of the focusing device (11) which are disposed in different angular regions about a central axis (12) of the reflecting surface (10) is taking place, wherein

deflection of the pump light beam (8) between in each case two of the reflecting regions (B1 to B12, B13 to B18) takes place with an optical path length (2f + 2 d1; 2f + 2 d2) that is greater than the optical path length (2 f) that corresponds to twice the focal length (2f) of the focusing device (11) in the case of telecentric imaging (10),

**characterized in that** the additional optical path length (2 d1, 2 d2) in excess of the optical path length (2f) in case of telecentric imaging is at least one quarter of the focal length (f) of the focusing device (11) in order to compensate for a beam expansion of the pump light beam (8), caused by aberrations of the focusing device (11), in the focusing onto the laser-active medium (2).

**19.** Method according to claim 18, in which a deflection of the pump light beam (8) additionally takes place between reflecting regions (B1 to B12, B13 to B18) disposed at different distances from the central axis (12) of the reflecting surface (10).

**20.** Method according to any one of claims 18 or 19, in which the additional optical path length (2 d1; 2 d2) in excess of the optical path length (2f) in the case of telecentric imaging is at least half of the focal length (f) of the focusing device (11).

**Revendications**

**1.** Ensemble de lumière de pompage (6) pour un laser à disque (1), comprenant :

un dispositif de focalisation, en particulier un miroir concave (11), doté d'une surface réfléchissante (10) pour focaliser un faisceau de lumière de pompage (8) collimaté lors de l'entrée dans l'ensemble de lumière de pompage (6) sur un milieu actif laser sous la forme d'un disque laser (2) qui est disposé à un foyer du dispositif de focalisation, et

un ensemble de déviation (15) pour dévier le faisceau de lumière de pompage (8) entre des zones réfléchissantes (B1 à B12) formées sur la surface réfléchissante (10) et disposées dans différents secteurs angulaires autour d'un axe médian (12) de la surface réfléchissante (10), le dispositif de déviation (15) étant conçu pour produire une déviation du faisceau de lumière de pompage (8) entre chaque fois deux des zones réfléchissantes (B1 à B12) avec une longueur de trajet optique (2f + 2 d1 ; 2f + 2 d2) qui est supérieure à la longueur de trajet optique (2f) correspondant au double de la distance focale (2 f) du dispositif de focalisation (11) dans le cas d'une reproduction télécentrique, caractérisé en ce

que la longueur de trajet optique supplémentaire (2 d1 ; 2 d2) qui va au-delà de la longueur de trajet optique (2f) dans le cas de la reproduction télécentrique est au moins égale à un quart de la distance focale (f) du dispositif de focalisation (11) afin de compenser un élargissement du faisceau de lumière de pompage (8) provoqué par des erreurs de reproduction du dispositif de focalisation (11) lors de focalisations successives sur le milieu actif laser (2).

**2.** Ensemble de lumière de pompage selon la revendication 1, **caractérisé en ce que** la longueur de trajet optique supplémentaire (2 d1 ; 2 d2) qui va au-delà de la longueur de trajet optique (2f) dans le cas de la reproduction télécentrique est au moins égale à la moitié de la distance focale (f) du dispositif de focalisation (11).

**3.** Ensemble de lumière de pompage selon la revendication 1 ou 2, **caractérisé en ce que** l'ensemble de déviation (15) est conçu pour dévier le faisceau de lumière de pompage (8) entre des zones réfléchissantes (B1 à B12 ; B13 à B18) situées à des distances différentes de l'axe médian (12) de la zone réfléchissante (10).

4. Ensemble de lumière de pompage selon l'une des revendications précédentes, dans lequel l'ensemble de déviation (15) est conçu pour dévier le faisceau de lumière de pompage (8) entre chaque fois deux des zones réfléchissantes (B1 à B12 ; B13 à B18) situées à la même distance de l'axe médian (12) de la zone réfléchissante (10) avec une même longueur de trajet optique (2f + 2 d1 ; 2f + 2 d2).

5. Ensemble de lumière de pompage selon l'une des revendications précédentes, dans lequel les zones réfléchissantes (B13 à B18 ; B1 à B12) sont disposées dans une première zone annulaire intérieure (RB1) et une deuxième zone annulaire extérieure (RB2) de la surface réfléchissante (10).

6. Ensemble de lumière de pompage selon la revendication 5, dans lequel la longueur de trajet optique (2 f + 2 d1) du faisceau de lumière de pompage (8) en cas de déviation entre deux zones réfléchissantes (B13 à B18) dans la première zone annulaire intérieure (RB1) est plus petite que la longueur de trajet optique (2f + 2 d2) en cas de déviation du faisceau de lumière de pompage (8) entre deux zones réfléchissantes (B1 à B12) dans la deuxième zone annulaire extérieure (RB2).

7. Ensemble de lumière de pompage selon l'une des revendications 5 ou 6, dans lequel l'ensemble de déviation (15) présente un dispositif de déviation (17a) pour dévier le faisceau de lumière de pompage (8) entre une zone réfléchissante (B13) dans la première zone annulaire (RB1) et une zone réfléchissante (B12) dans la deuxième zone annulaire (RB2), le dispositif de déviation (17a) présentant deux surfaces de miroir (20a, 20b) ainsi qu'une optique de reproduction (22, 23) qui sont conçues pour respecter la condition de Scheimpflug lors de la reproduction du faisceau de lumière de pompage (8) par les deux focalisations associées à la déviation sur les zones réfléchissantes (B 13, B12).

8. Ensemble de lumière de pompage selon l'une des revendications précédentes, dans lequel la première zone annulaire (RB1) présente un nombre de six zones réfléchissantes (B 13 à B18).

9. Ensemble de lumière de pompage selon l'une des revendications 5 à 8, dans lequel la deuxième zone annulaire (RB2) présente un nombre de douze zones réfléchissantes (B1 à B12).

10. Ensemble de lumière de pompage selon l'une des revendications 5 à 9, dans lequel la surface réfléchissante (10) présente une troisième zone annulaire (RB3) radialement extérieure, qui comprend de préférence un nombre de dix-huit zones réfléchissantes (B19 à B36).

11. Ensemble de lumière de pompage selon l'une des revendications précédentes, dans lequel la surface réfléchissante (10) présente une forme asphérique, en particulier une forme parabolique.

12. Ensemble de lumière de pompage selon l'une des revendications précédentes, dans lequel l'ensemble de déviation (15) présente au moins un dispositif de déviation (16a-16d, 7) doté de deux surfaces de déviation (20a, 20b) orientées symétriquement par rapport à un plan de symétrie (21 a), qui sont de préférence formées sur un ou sur plusieurs prismes (21).

13. Ensemble de lumière de pompage selon l'une des revendications 5 à 12, dans lequel l'ensemble de déviation (15) présente un dispositif de déviation (16a-16d) pour dévier le faisceau de lumière de pompage (8) en direction azimutale entre les zones réfléchissantes (B13 à B18) de la première zone annulaire (RB1) et/ou les zones réfléchissantes (B1 à B12) de la deuxième zone annulaire (RB2).

14. Ensemble de lumière de pompage selon l'une des revendications précédentes, comprenant en outre une source de lumière de pompage (7) pour générer le faisceau de lumière de pompage (8).

15. Ensemble de lumière de pompage selon la revendication 14, comprenant en outre une optique de collimation (9) disposée dans le chemin optique entre la source de lumière de pompage (8) et la surface réfléchissante (10) pour collimater le faisceau de lumière de pompage (8).

16. Ensemble de lumière de pompage selon la revendication 15, dans lequel un diamètre ($D_{Pump}$) du faisceau de lumière de pompage (8) sortant de la source de lumière de pompage (7) est égal à la moitié d'un diamètre ($D_{koll}$) du faisceau de lumière de pompage (8) collimaté.

17. Laser à disque (1), comprenant un milieu actif laser (2) ainsi qu'un ensemble de lumière de pompage (6) selon l'une des revendications précédentes.

18. Procédé de pompage d'un milieu actif laser (2), consistant à :

focaliser plusieurs fois un faisceau de lumière de pompage (8), collimaté lors de la première focalisation, sur le milieu actif laser (2) au moyen d'un dispositif de focalisation, en particulier d'un miroir concave (11), le milieu actif laser étant disposé sous la forme d'un disque laser (2) au foyer du dispositif de focalisation, une déviation du faisceau de lumière de pompage (8) entre différentes zones réfléchissantes (B1 à B12) d'une surface réfléchissante (10) du dispositif de focalisation (11), qui sont disposées dans différents secteurs angulaires autour d'un axe médian (12) de la zone réfléchissante (10), étant effectuée entre des étapes de focalisation successives, la déviation du faisceau de lumière de pompage (8) étant effectuée entre chaque fois deux des zones réfléchissantes (B1 à B12) avec une longueur de trajet optique (2f + 2 d1 ; 2f + 2 d2) qui est supérieure à la longueur de trajet optique (2f) correspondant au double de la distance focale (2 f) du dispositif de focalisation (11) dans le cas d'une reproduction télécentrique (10),
caractérisé en ce
que la longueur de trajet optique supplémentaire (2 d1 ; 2 d2) qui va au-delà de la longueur de trajet optique (2f) dans le cas de la reproduction télécentrique est au moins égale à un quart de la distance focale (f) du dispositif de focalisation (11) afin de compenser un élargissement du faisceau de lumière de pompage (8) provoqué par des erreurs de reproduction du dispositif de focalisation (11) lors de la focalisation sur le milieu actif laser (2).

19. Procédé selon la revendication 18, selon lequel une déviation du faisceau de lumière de pompage (8) est effectuée en plus entre des zones réfléchissantes (B1 1 à B12, B13 à B18) situées à des distances différentes de l'axe médian (12) de la surface réfléchissante (10).

20. Procédé selon l'une des revendications 18 ou 19, selon lequel la longueur de trajet optique supplémentaire (2 d1 ; 2 d2) qui va au-delà de la longueur de trajet optique (2f) dans le cas de la reproduction télécentrique est au moins égale à la moitié de la distance focale (f) du dispositif de focalisation (11).

Fig. 1

Fig. 2

Fig. 3

Fig. 4a

Fig. 4b

Fig. 5a

Fig. 5b

Fig. 5c

Fig.6

Fig.7a

Fig.7b

Fig. 8a

Fig. 8b

Fig. 8c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0632551 B1

- EP 1252687 B1

**In der Beschreibung aufgeführte Nicht-Patentliteratur**

- **S. ERHARD.** Pumpoptiken und Resonatoren für Scheibenlaser. *Dissertation,* 2002, ISBN 3-8316-0173-9
- **C. STEWEN.** Scheibenlaser mit Kilowatt-Dauerstrichleistung. *Dissertation,* 2002, ISBN tgart, 2002, ISBN 3-89675-763

- **S. YANG et al.** Multipass Ti:sapphire amplifier based on a parabolic mirror. *Optics Communications,* 2004, vol. 234, 385-390
- **M. NAJAFI et al.** Simulation of thin disk laser pumping process for temperature dependent Yb:YAG property. *Optics Communications,* 2009, vol. 282, 4103-4108